(19) **Europäisches Patentamt / European Patent Office / Office européen des brevets**

(11) **EP 4 297 960 B1**

(12) **FASCICULE DE BREVET EUROPEEN**

(45) Date de publication et mention de la délivrance du brevet:
**04.12.2024 Bulletin 2024/49**

(21) Numéro de dépôt: **22707101.6**

(22) Date de dépôt: **18.02.2022**

(51) Classification Internationale des Brevets (IPC):
*B29C 70/22* (2006.01)  *B29C 70/30* (2006.01)
*B29C 70/54* (2006.01)  *B29C 70/20* (2006.01)
*B29C 70/50* (2006.01)  *B29C 70/38* (2006.01)

(52) Classification Coopérative des Brevets (CPC):
**B29C 70/228; B29C 70/207; B29C 70/30;
B29C 70/50; B29C 70/545;** B29C 70/386

(86) Numéro de dépôt international:
**PCT/EP2022/054131**

(87) Numéro de publication internationale:
**WO 2022/179956 (01.09.2022 Gazette 2022/35)**

(54) **PROCEDE DE FABRICATION D'UNE PIECE COMPOSITE ET PREFORME POUR SA FABRICATION**

VERFAHREN ZUR HERSTELLUNG EINES VERBUNDTEILS UND VORFORM ZUR HERSTELLUNG DAVON

METHOD FOR MANUFACTURING A COMPOSITE PART AND PREFORM FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2021 FR 2101805**

(43) Date de publication de la demande:
**03.01.2024 Bulletin 2024/01**

(73) Titulaire: **Composites Busch SA
2900 Porrentruy (CH)**

(72) Inventeurs:
- **AUBRY, Jérome
  2900 Porrentruy (CH)**

- **DANGER, Xavier
  2900 Porrentruy (CH)**
- **MUDERRIS, Ahmet
  2900 Porrentruy (CH)**

(74) Mandataire: **Connor, Marco Tom et al
Pecher & Partners
Rue Louis de Geer, 6
1348 Louvain-la-Neuve (BE)**

(56) Documents cités:
**FR-A1- 2 928 293    FR-A1- 3 078 010
US-A- 5 480 508    US-A- 5 954 917**

**Description**

**DOMAINE DE L'INVENTION**

L'invention concerne le domaine des pièces composites hautes performances. L'invention se rapporte plus particulièrement à un produit composite semi fini à base de segments de fibres longues noyées dans une matrice de résine.

**ART ANTERIEUR**

Les matériaux composites sont de plus en plus présents dans les secteurs où nous trouvons des pièces en mouvement. Les secteurs les plus concernés sont par exemple l'aéronautique, le spatial, le médical, l'automobile et la mobilité en général car ces matériaux permettent de réaliser des pièces avec des performances équivalentes aux pièces métalliques habituelles mais avec des masses inférieures. Par exemple, la densité du titane est de 4,40 kg/dm$^3$, celle de l'aluminium est de 2,70 kg/dm3 et celle du carbone époxy est de 1,60 kg/dm$^3$.

Cette optimisation de la masse permet par exemple aux constructeurs aéronautiques d'alléger les structures des aéronefs et donc de réduire la puissance des moteurs embarqués par lesdits aéronefs. Cette disposition permet aux compagnies aériennes de baisser les consommations de carburants, de réduire leur empreinte carbone et d'augmenter les nombres de passagers ainsi que les rayons d'action des avions. L'ensemble de ces avantages permet de baisser les coûts de vol par passager.

Les nouveaux avions intègrent des matériaux composites sur plus de 50% de leur masse. Ces matériaux composites sont composés pour une part d'un réseau de fibres généralement tissées ou unidirectionnelles et pour une seconde part de résine habituellement thermodurcissable ou thermoplastique.

Cependant, une problématique forte des matériaux composites reste l'optimisation des coûts liés à la mise en oeuvre desdits matériaux. Effectivement, les matériaux composites standards utilisés dans l'aéronautique sont principalement réalisés à base de tissus de carbone ou de nappes de carbone pré-imprégnées de résine qui donnent des pièces ayant des performances mécaniques importantes au détriment de leurs coûts. En effet, elles nécessitent des temps importants de mise en oeuvre, les pièces étant toutes globalement de formes complexes et différentes, leur réalisation est difficilement industrialisable.

Les fibres de renfort, typiquement des fibres de carbone ou de verre, mais aussi aramide ou naturelle (p.ex., végétale), ont des propriétés orthotropes élevées dans le sens de la longueur. En noyant les fibres dans une résine donnant sa forme à une pièce composite, une contrainte appliquée sur la pièce est transmise par la résine aux fibres à travers l'interface entre les fibres et les résines. Plus les fibres sont longues, plus l'interface à travers laquelle la transmission d'une contrainte peut se faire entre la résine et une fibre est longue et efficace. On distingue ainsi les composites à fibres longues à hautes performances et les composites à fibre courtes à plus basse performances. Dans certains cas, on parle de fibres longues pour des fibres de longueur d'au moins 2 mm, car au-delà de ces longueurs il devient très difficile voire impossible de mouler par injection un tel composite. Cependant, dans le cadre de la présente invention, des fibres longues sont définies comme des fibres ayant une longueur d'au moins 10 mm, de préférence d'au moins 50 mm ou même d'au moins 100 mm. Des fibres continues sont bien entendu considérées comme des fibres longues. Ce critère est choisi non pas par rapport à la possibilité ou pas de mouler par injection, mais plutôt sur base d'une longueur d'interface matrice-fibre suffisante pour obtenir un transfert de charges suffisant de la matrice vers les fibres lorsqu'une pièce composite est soumise à des contraintes extérieures.

Les composites à fibres courtes ont donc des propriétés mécaniques inférieures aux composites à fibres longues, mais permettent la fabrication de pièces à géométries complexes, par exemple par moulage par injection. Par contre, si les composites à fibres longues orientées de manière ciblée afin de profiter des propriétés orthotropes des fibres offrent de très hautes performances, elles ne permettent généralement pas la fabrication de pièces à géométries complexes. C'est un objectif de longue date dans le domaine des matériaux composites de pouvoir augmenter la complexité de la géométrie des pièces tout en maintenant élevées les propriétés mécaniques propres aux composites à fibres longues. La présente invention propose une solution à ce problème historique et toujours d'actualité.

Malgré l'avancée de la robotisation durant le procédé de fabrication des pièces composites de grande taille, de nombreuses applications génèrent des chutes de matériau composite préimprégné importantes, qui sont trop petites pour être réutilisées dans la fabrication de ces mêmes pièces et qu'il est difficile de réutiliser dans des pièces composites de plus petites tailles à géométries complexes. En effet, la plupart des petites pièces composites de formes complexes à la destination du secteur de l'aéronautique sont encore minutieusement drapées à la main par des opérateurs. Cette étape demande une grande dextérité et implique donc des coûts de production importants.

Plusieurs méthodes ont été envisagées pour réaliser industriellement des pièces composites structurales légères et avec des coûts optimisés.

De manière connue, le document US 2010/0233423 A1 décrit la réalisation d'un matériau de moulage qui présente des coupes effectuées transversalement à une direction d'extension définie par le sens de la chaine du renfort fibreux sur le renfort textile. Ce document décrit des coupes partielles et donc qui ne permettent pas de séparer intégralement les faisceaux fibreux les uns des autres. Ce document ne décrit pas non plus la coupe du système de résine et dans le cas où ces coupes partielles permettent la déformation du textile dans le sens de la chaine, elles ne permettent pas de conserver l'intégralité des segments lors du mouvement relatif de ceux-ci.

Pour que la pièce finale présente les meilleures caractéristiques mécaniques possibles, il est important que lors du moulage, à l'étape de la mise en température et en pression de la pièce, l'ensemble des faisceaux soient indépendants les uns des autres. L'indépendance des faisceaux est importante afin de conserver une mobilité intégrale, c'est-à-dire que sous les effets d'une pression réalisée sur la pièce, le segment unitaire puisse se déplacer sans provoquer de déchirure ni de frisure des renforts fibreux et ceci sans impliquer de séparation entre les fibres et la résine. Les solutions aux problèmes techniques cités précédemment ne sont pas évoquées. De plus, les coupes dans le sens de la chaine sont géométriquement alignées, ce qui provoque un chemin de faiblesse sur la pièce finale. Ledit chemin de faiblesse est préjudiciable aux caractéristiques mécaniques finales de la pièce.

Le point majeur de la maturation de la résine n'est pas abordé. Or, il est connu par l'homme de métier que dans un matériau pré-imprégné, la résine est évolutive et que son état n'est pas figé, effectivement, lorsque la résine a été imprégnée récemment, elle est encore fluide, elle pourra donc se séparer des fibres facilement lors de la mise en oeuvre. Au contraire, si elle est trop visqueuse, elle va empêcher la bonne séparation entre les réseaux de fibres non délignés dans le sens longitudinal. Or il est reconnu scientifiquement que le désalignement de fibres d'un angle de cinq degrés par rapport à leur axe longitudinal provoque une perte du module de traction qui peut aller jusqu'à 30%. Cette perte du module de traction est clairement une problématique liée à la découpe partielle des segments.

La problématique liée au mouvement des réseaux fibreux lorsque ceux-ci doivent se déplacer n'est pas non plus abordée. En effet, dans le cas de la réalisation d'une pièce à la géométrie complexe, les mouvements des réseaux de fibres vont soit s'écarter, soit vont se resserrer dans le plan suivant les zones de la pièce. Dans le cas du matériau présenté dans le document US 2010/0233423A1, du fait de la juxtaposition des zones de découpes les extrémités des fibres sur la ligne de découpe vont appuyer les unes contre les autres et se froisser dans le cas d'un mouvement de striction au sein de la pièce. Ce phénomène va être amplifié par l'absence de mobilité latérale induite par la liaison par résine.

Des technologies SMC (Sheet Molding Compound pour mélange à mouler en feuilles) ou BMC (Bulk Molding Compound pour mélange de moulage en vrac) hautes performances ont été développées pour réduire les temps de mise en oeuvre. De nombreux produits de moulage de type BMC ou SMC permettent d'optimiser les coûts car ils permettent de réduire les temps de production, cependant, du fait de leur organisation fibreuse non contrôlée et non répétitive, ces types de moulages sont difficilement applicables à des pièces subissant de grandes contraintes mécaniques. En effet, le type SMC permet une industrialisation plus importante, mais sans atteindre les performances ni la reproductibilité des procédés manuels applicables à des matériaux composites pré-imprégnés. Le problème technique du type SMC réside dans le fait que les fibres de renfort sont coupées alors qu'elles sont encore sèches et non imprégnées, puis distribuées par gravité sur un film de résine. Cette distribution étant aléatoire, la fraction volumique de fibres finale du composite varie de façon importante. La distribution aléatoire donne également des directions de fibres non contrôlées et non reproductibles, ces matériaux sont donc difficilement utilisables pour des applications ou les contraintes mécaniques sont importantes.

Le document US 6,838,148 B1 décrit un matériau SMC amélioré constitué d'un empilement de fibres unidirectionnelles pré-imprégnées et de fibres coupées reparties de façon aléatoire. Les fibres sont superposées en couches successives ayant chacune une direction différente. Si ce produit peut représenter une avancée par rapport à un SMC traditionnel, il ne règle pas deux problématiques techniques majeures, la première étant la capacité du matériau à se déformer pour pouvoir répondre aux différentes contraintes de forme d'une grande diversité de pièces et le second étant de posséder des propriétés mécaniques relativement faibles du fait de la répartition aléatoire des fibres.

Le document EP 0916477 A1 décrit une technologie de découpe intégrale de segments de nappes de fibres pré-imprégnées qui sont ensuite mélangées de façon tridimensionnelle. Il est donc clairement établi à partir de cette phase que les segments seront mélangés de façon aléatoire dans l'espace (3 Dimensions), ce qui conférera au produit final des caractéristiques mécaniques très faibles du fait d'un croisement très important entre les segments de nappe, de plus, cette disposition ne permettra pas de contrôler et donc de reproduire avec précision les caractéristiques mécaniques d'une pièce. Or il est important que sur la réalisation d'une série de pièces, la totalité des pièces aient les mêmes caractéristiques mécaniques.

Le document EP1134314 A1 décrit un produit intermédiaire composite qui se présente sous la forme de couches de segments de fibres pré-imprégnées. Ces segments sont disposés aléatoirement dans le plan (2 Dimensions), cependant, même si leur répartition moyenne est presque isotrope, leur répartition précise dans le plan est aléatoire et il y a un embuvage important entre les faisceaux, par le fait, leurs caractéristiques mécaniques seront faibles et ne peuvent pas être contrôlées finement ni donner lieu à une production de pièces aux caractéristiques reproductibles.

Le document EP 3140104 A1 décrit la réalisation d'une préformes utilisant des bandes de petite largeur à l'aide d'une machine de dépose automatique de bandes de carbone. Une problématique importante de l'utilisation d'une telle machine est le coût lié à son achat qui reste difficile à amortir. Ce document ne traite pas de la possibilité de réaliser avec cette machine un matériau de base standard de type SMC.

Toutefois, ces solutions ne donnent pas une entière satisfaction.

Afin de résoudre tout ou partie des inconvénients mentionnés ci-dessus, il a été proposé dans la demande de brevet FR 3078010 A1 de réaliser une pièce composite en empilant plusieurs couches préimprégnées continues comprenant des segments plats multifibres, les segments d'une même couche étant orientés selon une direction unique, et lesdits segments étant liés par adhésion au droit de leurs zones de croisement-superposition avec les segments de couches de segments adjacents, de manière à former un tapis de masse et d'épaisseur constante, de faible cohésion propre présentant une souplesse relative.

La fabrication d'un tel produit composite nécessite de former au préalable des nappes préimprégnées continues segmentées qui sont ensuite empilées les unes sur les autres lors d'une opération de formation d'un ruban multicouche continu. Cette opération est optimale dans le cas d'un ruban multicouche continu unidirectionnel, où toutes les fibres sont alignées à 0°. Si par contre l'orientation des fibres dans les nappes préimprégnés continues segmentées du ruban multicouche continu doit varier d'une couche à l'autre, il faut utiliser une machine de placement automatique de fibres (AFP) pour orienter les fibres d'au moins une nappe préimprégnée continue segmentée à un angle de renfort différent de 0°, par exemple, $\pm$ 45° ou 90°. L'étape de placement automatique de fibres pour former une telle nappe préimprégnée continue segmentée à un angle de renfort différent de 0° est longue et ne permet pas d'utiliser directement comme matière de départ des nappes monocouches préimprégnées disponibles sur le marché ou provenant de chutes d'un autre procédé de pièces composites de grandes tailles. Un angle de renfort ($\beta$) est ici défini dans le présent document avec une tolérance de $\pm 5°$.

L'invention vise donc à proposer un procédé de fabrication de pièces composites à hautes performances et à géométries complexes, utilisant un matelas multicouche segmenté discret innovant et obtenu à partir de plis discrets segmentés pouvant utiliser comme matière de départ directement et sans manipulation préalable des nappes monocouches préimprégnées disponibles sur le marché ou provenant de chutes d'un autre procédé de pièces composites de grandes tailles. La présente invention concerne aussi des procèdes de fabrication des plis préimprégnés discrets et des matelas multicouches segmentés discrets. Ces avantages et autres avantages sont décrits plus en détail dans la description détaillée de l'invention qui suit.

## EXPOSE DE L'INVENTION

La présente invention est définie dans les revendications indépendantes. Des variantes préférées sont définies dans les revendications dépendantes. En particulier, la présente invention concerne pli discret segmenté comprenant,

- une couche préimprégnée segmentée discrète ayant une épaisseur et étant constituée de fibres unidirectionnelles disposées parallèlement à la direction longitudinale (D), les fibres étant noyées dans une matrice de résine, et

- une doublure antiadhésive discrète appliquée sur une face de la couche préimprégnée segmentée discrète,

**caractérisé en** ce **que,** seule la couche segmentée discrète comprend des segments découpés sur toute son épaisseur et disposés en quinconce.

Le pli discret segmenté est formé par une découpe transversale d'une nappe continue segmentée. La nappe continue segmentée comprend,

- une couche préimprégnée segmentée continue ayant une épaisseur et étant constituée de fibres unidirectionnelles disposées parallèlement à la direction longitudinale (D), les fibres étant noyées dans une matrice de résine ; elle comprend des segments découpés sur toute son épaisseur et disposés en quinconce, et

- une doublure antiadhésive continue appliquée sur une face de la couche préimprégnée segmentée continue,

La nappe continue segmentée est formée en fournissant une nappe monocouche continue comprenant,

- une couche préimprégnée continue constituée de fibres unidirectionnelles disposées parallèlement à une direction longitudinale (D), les fibres étant noyées dans une matrice de résine ; elle peut être achetée prête à l'emploi ou provenir de chutes non-utilisées dans un procédé antérieur de fabrication de pièces composites

- une doublure antiadhésive continue (2) appliquée sur une face de la couche préimprégnée continue, par exemple formée d'un support en papier recouvert d'une couche à base de silicone

et en découpant la nappe monocouche continue de manière à former dans la couche préimprégnée continue des segments disposés en quinconce, la découpe est réalisée de telle sorte à laisser intacte la doublure antiadhésive continue;

Une nappe continue est définie comme étant une nappe ayant une géométrie inscrite dans un rectangle de longueur (L) et de largeur (l) de rapport la longueur sur la largeur (L / l) supérieur à 20 (i.e., L /l > 20). Un pli discret est défini comme étant un pli ayant une géométrie inscrite dans un rectangle de longueur (L) et de largeur (l) de rapport de la longueur sur la largeur (L /l) inférieur ou égal à 20 (i.e., L /l ≤ 20).

Le plis discret segmenté de la présente invention est formé en découpant la nappe segmentée continue sur l'intégralité de sa largeur et de son épaisseur, y compris la doublure antiadhésive selon deux lignes de découpe parallèles à des directions de découpe orientées obliquement par rapport à la direction longitudinale (D), Les lignes de découpe forment un angle de découpe ($\alpha$) avec la direction longitudinale (D). L'angle de découpe ($\alpha$) peut être par exemple égal à 90°, +45°, -45°, +60°, -60°, +30°, ou -30°, à ± 5° près

Dans un même pli discret segmenté, les segments ont de préférence une géométrie comprenant deux côtés opposés parallèles à la direction longitudinale (D) présentant des dimensions identiques au sein du pli discret segmenté préimprégné. La géométrie des segments est de préférence inscrite dans un rectangle avec une longueur mesurée le long de la direction longitudinale (D) comprise de préférence entre 10 mm et 200 mm, de préférence entre 50 et 150 mm, encore de préférence entre 70 et 130 mm ou sensiblement égale à 100 mm, et une largeur comprise de préférence entre 5 mm et 50 mm, de préférence sensiblement égale à 8 mm.

La présente invention concerne également un matelas multicouche segmenté discret composé d'un empilement de couches préimpregnées discrètes comprenant, d'une part,

- (N+1) couches préimprégnées discrètes de fibres unidirectionnelles noyées dans une matrice de résine, les (N+1) couches préimprégnées discrètes étant empilées les unes sur les autres et

- une doublure antiadhésive discrète appliquée sur une face libre de chacune d'une première et d'une (N + 1)ème couches préimprégnées discrètes, enfermant en sandwich les (N+1) couches préimprégnées discrètes.

Le matelas multicouche segmenté discret se distingue de l'art antérieur en ce qu'au moins une des (N+1) couches préimprégnées discrètes, de préférence toutes les (N+1) couches préimprégnées discrètes sont des couches préimprégnées segmentées discrètes telles que définies supra. De plus, au moins une couche préimprégnée segmentée discrète a une géométrie de triangle, de trapèze ou de parallélogramme, y compris un losange, rectanlge ou carré. Dans une variante de l'invention, l'au moins une couche préimprégnée segmentée discrète comprend au moins deux angles différents de 90°.

Les fibres d'une couche préimprégnée discrète donnée forment un angle de renfort ($\beta$) compris entre 0 et 180° (i.e., $\beta$ = 0 à 180°) avec les fibres des couches préimprégnées discrètes du même empilement discret qui sont adjacentes à et en contact avec la couche préimprégnée discrète donnée. Dans une variante de l'invention, toutes les couches préimprégnées discrètes d'un empilement discret sont les couches préimprégnées segmentées discrètes dont les angles de découpe sont de 90° ou ±45° et dont les angles de renfort ($\beta$) sont égaux à l'angle de découpe ($\alpha$) additionné d'un multiple (n) de 45° avec n = 0 à 4 (i.e. $\beta = \alpha + n \times 45°$, avec n = 0 à 4).

Le matelas multicouche segmenté discret peut être produit de deux manières. Dans une première variante, on forme une série d'empilements de couches préimprégnées discrètes posés sur un ruban continu. On peut alors couper le ruban continu entre deux empilements pour obtenir un matelas multicouche segmenté discret. Dans une seconde variante, on peut empiler des plis discrets préimprégnés les uns sur les autres en retirant quand nécessaire la doublure antiadhésive discrète, pour former directement le matelas multicouche segmenté discret.

Dans la première variante, il faut fournir un ruban continu constitué d'une nappe monocouche continue une nappe continue segmentée, ou une doublure antiadhésive continue, telles que définies supra, pour former une première couche du matelas multicouche segmenté discret.

Dans la seconde variante, la première couche est formée par un pli préimprégné discret comprenant, d'une part,

- une couche préimprégnée discrète qui comprend des fibres unidirectionnelles noyées dans une matrice de résine, et

- une doublure antiadhésive discrète appliquée sur une face de la couche préimprégnée discrète,

On pose séquentiellement sur une face de la première couche ne comprenant pas la doublure antiadhésive continue ou sur la doublure antiadhésive continue si le ruban continu est formé par une doublure antiadhésive continue, N plis préimprégnés discrets en retirant la doublure antiadhésive discrète de chaque pli préimprégné discret, avant de poser un nouveau pli préimprégné discret sur celui-ci et optionnellement compacter les plis préimprégnés discrets ainsi empilés, de telle sorte que,

- la couche préimprégnée discrète de chaque pli préimprégné discret soit en contact avec la couche préimprégnée discrète des plis-préimprégnés discrets adjacents avec lesquels ils sont en contact,

- une (N+1)<sup>ème</sup> couche préimprégnée discrète a une face libre sur laquelle est déposée la doublure antiadhésive discrète (2d), formant ainsi le (N+1)<sup>ème</sup> pli préimprégné discret,

Dans la première variante où la première couche est formée par un ruban continu, on dépose une série d'empilements tels que décrits supra, côte-à-côte. On obtient ainsi un ruban continu comprenant une série d'empilements de N couches, qu'on peut séparer en découpant le ruban continu entre deux empilements adjacents.

Les deux variantes de procédés de fabrication d'un matelas segmenté discret se distinguent chacun de l'art antérieur en ce que, au moins un pli préimprégné discret, de préférence tous les plis préimprégnés discrets sont des plis discrets segmentés tels que décrits supra, dans lequel la couche préimprégnée discrète est formée par la couche préimprégnée segmentée discrète,

L'invention concerne aussi un procédé pour produire une pièce composite comprenant,

- fournir un matelas multicouche segmenté discret tel que défini ci-dessus,

- découper le matelas multicouche segmenté discret pour former une sous-préforme dont la géométrie est adaptée à une géométrie de la pièce composite,

- optionnellement, assembler différentes sous-préformes pour former une préforme finale de la pièce composite,

- déposer la sous-préforme ou la préforme finale dans un moule,

- appliquer de la pression et de la chaleur afin de consolider la sous-préforme ou la préforme finale et ainsi former la pièce composite, et

- retirer la pièce composite du moule.

Au moins une partie de la pièce composite ainsi formée peut être, soit

- quasi-isotrope produite avec un matelas multicouche segmenté discret ou une préforme finale dont les angles de renfort ($\beta$) varient entre les couches préimprégnées discrètes entre 0°, $\pm$45°, et 90°, soit

- quasi orthotrope produit avec un matelas multicouche segmenté discret ou une préforme finale dont toutes les fibres sont orientées suivant un même angle de renfort ($\beta$) de 0°, ou

- mixte produit avec un matelas multicouche segmenté discret ou une préforme finale dont les angles de renfort ($\beta$) varient entre les couches préimprégnées discrètes selon les propriétés mécaniques localement désirées.

Les fibres peuvent être des fibres de carbone de verre, d'aramide, céramiques, ou naturelles et sont noyées soit,

- dans une résine thermodurcissable, comprenant de préférence une résine époxyde, soit

- dans un polymère thermoplastique.

## BREVE DESCRIPTION DES FIGURES

L'invention sera mieux comprise à l'aide de la description détaillée qui est exposée ci-dessous en regard des dessins annexés dans lesquels :

[Fig. 1] représente un schéma de principe de découpe d'une nappe monocouche continue dans le but de former des segments unidirectionnels pré-imprégnés disposés en quinconce conformément à la présente invention ;
[Fig. 1a] représente une vue de dessus de la nappe monocouche continue représentée sur la figure 1 ;
[Fig. 2] représente un schéma de principe de découpe transversale de la nappe continue segmentée dans le but de former une première série de plis discrets segmentés;
[Fig. 2a] représente une vue agrandie, de dessus de la nappe continue segmentée représentée sur la figure 2 ;
[Fig. 3] représente un schéma de principe de découpe transversale de la nappe continue segmentée dans le but de former une deuxième série de plis discrets segmentés;

[Fig. 3a] représente une vue agrandie, de dessus de la nappe continue segmentée représentée sur la figure 3 ;

[Fig. 4] représente un schéma de principe de découpe transversale de la nappe continue segmentée dans le but de former une troisième série de plis discrets segmentés;

[Fig. 4a] représente une vue agrandie, de dessus de la nappe continue segmentée représentée sur la figure 4 ;

[Fig. 5] représente un schéma de principe illustrant une première étape du procédé de fabrication d'un ruban continu d'empilements discrets selon la présente invention ;

[Fig. 6] représente un schéma de principe illustrant une deuxième étape du procédé de fabrication selon la présente invention ;

[Fig. 6a] représente une vue agrandie, de dessus du ruban continu représenté sur la figure 6 ;

[Fig. 7] représente un schéma de principe illustrant une troisième étape du procédé de fabrication selon la présente invention ;

[Fig. 7a] représente une vue agrandie, de dessus de la nappe continue segmentée représentée sur la figure 7 ;

[Fig. 8] représente un schéma de principe illustrant une quatrième étape du procédé de fabrication selon la présente invention ;

[Fig. 8a] représente une vue agrandie, de dessus de la nappe continue segmentée représentée sur la figure 8 ;

[Fig. 9a] représente un schéma de principe illustrant une première opération mise en oeuvre lors de l'étape d'empilement des plis préimprégnés discrets dans le procédé de fabrication de la présente invention ;

[Fig. 9b] représente un schéma de principe illustrant une deuxième opération mise en oeuvre lors de l'étape d'empilement des plis préimprégnés discrets dans le procédé de fabrication de la présente invention ;

[Fig. 9c] représente un schéma de principe illustrant une troisième opération mise en oeuvre lors de l'étape d'empilement des plis préimprégnés discrets dans le procédé de fabrication de la présente invention ;

[Fig. 10] représente un ruban continu d'empilements discrets obtenu par le procédé de la présente invention.

[Fig. 11a] représente un pli discret segmenté selon la présente invention.

[Fig. 11b] représente un matelas multicouche segmenté discret selon la présente invention.

[Fig. 12] représente différentes étapes d'un procédé de fabrication d'une pièce composite selon la présente invention.

[Fig. 13] représente des propriétés mécaniques en traction de composites obtenus par un procédé selon la présente invention et de composites de l'art antéirieur.

[Fig. 14] représente schématiquement sur un graphe montrant les performances mécaniques d'une pièce composite en fonction de la complexité de la géométrique des pièces processables à partir des différentes préformes représentées.

## DESCRIPTION DETAILLEE DE L'INVENTION

La présente invention concerne,

- un procédé de fabrication d'un pli discret segmenté 8 préimprégné comprenant une couche préimprégnée segmentée discrète 3ds,

- un pli discret segmenté 8 préimprégné obtenu par ce procédé,

- un matelas multicouche segmenté discret 80 composé d'un empilement de couches préimpregnées discrètes (3d) dont une au moins est une couche préimprégnée segmentée discrète (3ds), ayant une géométrie de triangle, trapèze ou de parallélogramme, de préférence non rectangle,

- deux procédés alternatifs pour produire un matelas multicouche segmenté discret 80, et

- un procédé pour produire une pièce composite 90 à partir de tels matelas multicouches segmentés discrets 80.

## PROCEDE DE FABRICATION D'UN PLI DISCRET SEGMENTE 8 PREIMPREGNE

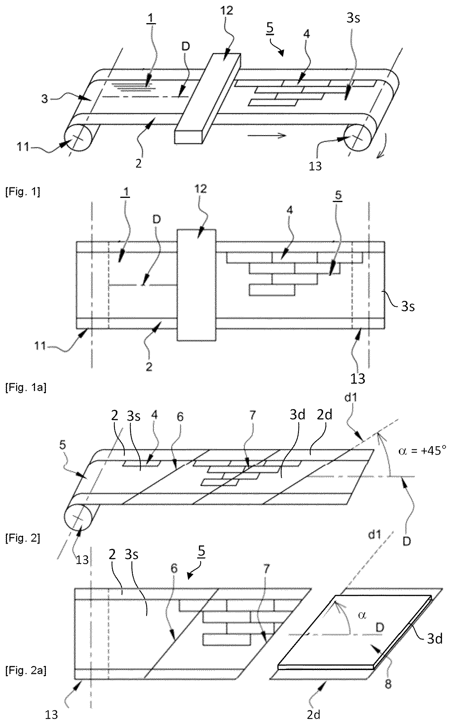

En référence aux figures 1 et 1a, il est représenté, à titre indicatif et de façon schématique, une installation matérialisant une première étape d'un procédé de formation d'un pli discret segmenté 8 selon l'invention. Lors de cette première étape, une nappe monocouche continue 1 de fibres enroulée sous forme d'une bobine 11 est dirigée vers un poste de découpe 12 au sein duquel elle subit une opération de découpe visant à produire des segments 4.

La nappe monocouche continue 1 comprenant

- une couche préimprégnée continue 3 constituée de fibres unidirectionnelles disposées parallèlement à une direction longitudinale D, les fibres étant noyées dans une matrice de résine,
- une doublure antiadhésive continue 2 appliquée sur une face de la couche préimprégnée continue.

La doublure antiadhésive continue 2 pourra avantageusement être constituée d'un support en papier recouvert d'une couche à base de silicone. La doublure antiadhésive continue 2 possédera notamment la capacité d'être facilement séparée de la couche de fibres 3, sans entraîner une migration des fibres sur la doublure antiadhésive continue 2.

Les fibres de la couche de fibres 3 pourront être constituées soit par des fibres de carbone, soit par des fibres de verre, soit par des fibres d'aramide, soit encore par des fibres céramiques, ou naturelles.

Les fibres de la couche préimprégnée continue 3 pourront être noyées dans une résine thermodurcissable, telle qu'une résine époxyde, polyester, vinylester, bismaelimide, polymide, phénolique, ou dans une résine thermoplastique, telle qu'une résine, polyéthérimide (PEI), polyphényensulfide (PPS), polyétherétherkétone (PEEK) et polyamide (PA).

Un avantage de la présente invention est que n'importe quelle nappe monocouche continue 1 telle que décrite qui soit disponible dans le commerce ou provenant de chutes d'un procédé de fabrication d'une autres pièce composite de grandes dimensions peut être utilisée dans le procède de la présente invention. C'est un avantage considérable, car des nappes monocouches continues 1 déjà qualifiées dans d'autres procédés peuvent être utilisées dans des applications dans les domaines notamment de l'aéronautique, le médical ou l'automobile, facilitant ainsi les procédures de qualification d'un nouveau produit, qui peuvent être très longues et coûteuses dans ces domaines. La réutilisation de chutes de matériaux provenant d'autres procédés de fabrication de pièces de composites à hautes performance de grandes dimensions, notamment dans le domaine de l'aéronautique, dans un procédé de fabrication de pièces composites à hautes performances et à géométries complexes représente une économie considérable dans la production de pièces composites utilisées dans la fabrication d'un avion.

Le poste de découpe 12 pourra être une tête de découpe, comme illustré sur la figure 1, ou un rouleau de découpe comportant une série de lignes de découpe en relief définissant un motif de découpe. Le poste de découpe 12 est notamment configuré pour découper uniquement la couche préimprégnée continue 3, formant ainsi une couche préimprégnée segmentée continue 3s en laissant intacte la doublure antiadhésive continue 2. De cette façon, les segments 4 formés dans la couche préimprégnée segmentée continue 3s sont maintenus ensemble au moyen de la doublure antiadhésive continue 2. Cette découpe partielle de la nappe monocouche continue 1 évite ainsi que des segments 4 ne soient plus liés au reste de la nappe monocouche continue 1 du fait de l'absence de zones de liaison. Une manipulation de la nappe continue segmentée 5 obtenue suite à l'opération de découpe partielle s'en trouve donc facilitée.

Les segments 4 sont avantageusement orientés selon une direction unique. Au sens de la présente invention, « selon une direction unique » signifie « selon une direction unique à 5° près ». De tels segments unidirectionnels procurent en effet de bonnes caractéristiques mécaniques, telles que des résistances en traction et flexion élevées par exemple. De préférence, les segments 4 comprennent deux cotés opposés parallèles à la direction longitudinale D, limitant ainsi le nombre de découpes inutiles des fibres de renfort, maximisant ainsi leur longueur dans la nappe continue segmentée 5.

La Nappe continue segmentée 5 obtenue par l'étape b) comprend,

- une couche préimprégnée segmentée continue 3s ayant une épaisseur et étant constituée de fibres unidirectionnelles disposées parallèlement à la direction longitudinale (D), les fibres étant noyées dans une matrice de résine, et

- une doublure antiadhésive continue 2 appliquée sur une face de la couche préimprégnée segmentée continue 3s,

Seule la couche segmentée continue 3s, non la doublure continue 2, comprend des segments 4 découpés sur toute son épaisseur et disposés en quinconce.

Par ailleurs, les segments 4 pourront posséder une forme identique, notamment une forme rectangulaire. Dans une forme préférentielle de l'invention, ils posséderont une longueur de préférence parallèle à la direction longitudinale D, qui est comprise entre 10 mm et 100 mm, de préférence sensiblement égale à 50 mm, et une largeur comprise entre 5 mm et 50 mm, de préférence sensiblement égale à 8 mm.

En outre, les segments 4 sont avantageusement positionnés en quinconce. Ce positionnement en quinconce des segments 4 procure en effet des caractéristiques mécaniques améliorées dans la pièce à former.

La nappe continue segmentée 5 ainsi produite peut ensuite être conditionnée sous la forme d'une bobine 13 avant d'être transférée sur une machine de reprise au niveau de laquelle une opération de découpe transversale de la nappe continue segmentée 5 est réalisée de manière à former une ou plusieurs séries de plis discrets segmentés 8 comme illustré sur les figures 2 à 4. La nappe continue segmentée 5 est découpée le long de deux lignes de découpe 6, 7 parallèles à une direction de découpe (d1, d2, d3), orientée obliquement par rapport à la direction longitudinale (D). La nappe 5 continue segmentée est découpée sur l'intégralité de sa largeur et de son épaisseur, y compris la doublure antiadhésive, formant ainsi un pli discret segmenté 8 préimprégné formé par une couche préimprégnée segmentée discrète 3ds et d'une doublure antiadhésive discrète 2d. Les lignes de découpe 6, 7 forment un angle de découpe ($\alpha$) avec la direction longitudinale (D); Comme les fibres d'une nappe continue segmentée 5 sont parallèles à la direction longitudinale (D), elles forment avec les côtés découpés du pli discret segmenté 8 ainsi obtenu l'angle de découpe ($\alpha$).

Une structure, telle qu'un pli ou un laminé est considéré comme étant discrète si elle a une géométrie inscrite dans un rectangle de longueur (L) et de largeur (l) de rapport de la longueur sur la largeur (L /l) inférieur ou égal à 20 (i.e., L /l $\leq$ 20). Une structure, telle qu'une nappe ou un ruban, est considérée comme étant continue si elle a une géométrie inscrite dans un rectangle de longueur (L) et de largeur (l) de rapport la longueur sur la largeur (L /l) supérieur à 20 (i.e., L / l > 20).

En référence aux figures 2 et 2a, il est représenté, à titre indicatif et de façon schématique, une étape de découpe transversale de la nappe continue segmentée 5 permettant de former une première série de plis discrets segmentés préimprégnés 8.

Lors de cette étape de découpe, la nappe continue segmentée 5 est déroulée depuis une bobine 13 vers un poste de découpe 14 au sein duquel elle est notamment découpée sur l'intégralité de sa largeur et de son épaisseur, y compris la doublure antiadhésive continue 2, le long de deux lignes de découpe 6, 7 parallèles et orientées obliquement par rapport à la direction longitudinale D. Les lignes de découpe 6, 7 forment ainsi un pli discret segmenté 8 en forme de parallélogramme et, de préférence, en forme de losange. Ce pli discret segmenté 8 est notamment défini par une direction principale d1 qui, aux Figures 2 et 2a, est parallèle aux lignes de découpe 6, 7. Cette direction de découpe d1 fait un angle de 45° avec la direction longitudinale D de la nappe continue segmentée 5. Ainsi, dans ce pli discret segmenté 8, les fibres sont orientées selon un angle $\alpha$ égal à +45° par rapport aux côtés du pli qui ont été découpés selon la direction de découpe d1.

Le poste de découpe 14 permettant de découper la nappe continue segmentée 5 en une série de plis discrets segmentés 8 peut comprendre une table sur le plan (X, Y) de laquelle se déplace une tête de découpe, qui peut être une lame rotative, un laser, un jet d'eau ou toute autre tête de découpe disponible sur le marché permettant de découper avec précision et proprement la nappe continue segmentée 5 en plis discrets segmentés 8.

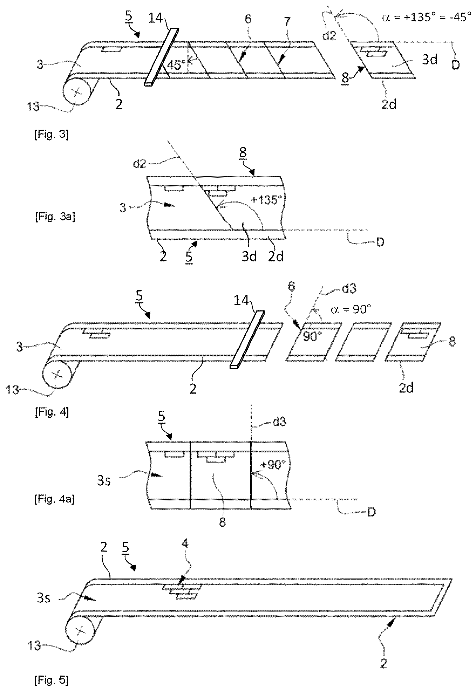

En référence aux figures 3 et 3a, il est représenté, à titre indicatif et de façon schématique, une étape de découpe transversale de la nappe continue segmentée 5 permettant de former une deuxième série de plis discrets segmentés 8.

Lors de cette étape de découpe, la nappe continue segmentée 5 est découpée sur l'intégralité de sa largeur et de son épaisseur, y compris la doublure antiadhésive continue 2, le long de deux lignes de découpe 6, 7 parallèles et orientées obliquement par rapport à la direction longitudinale D. Les lignes de découpe 6', 7 forment ainsi un pli discret segmenté en forme de parallélogramme. Ce pli discret segmenté 8 est notamment défini par une direction de découpe d2, qui est parallèle aux lignes de découpe 6, 7. Cette direction principale d2 fait un angle de +45° avec la direction longitudinale D de la nappe continue segmentée 5. Ainsi, dans ce pli discret segmenté 8, les fibres sont orientées selon un angle $\alpha$ égal à +135° avec la direction de découpe d2.

En référence aux figures 4 et 4a, il est représenté, à titre indicatif et de façon schématique, une étape de découpe transversale de la nappe continue segmentée 5 permettant de former une troisième série de plis discrets segmentés 8.

Lors de cette étape de découpe, la nappe continue segmentée 5 est découpée sur l'intégralité de sa largeur et de son épaisseur, y compris la doublure antiadhésive continue 2, le long de deux lignes de découpe 6', 7' parallèles et orientées selon une direction de découpe d3 perpendiculaire à la direction longitudinale D. Les lignes de découpe 6", 7" forment ainsi un pli discret segmenté 8 en forme de rectangle. Ce pli discret segmenté 8 est notamment défini par une direction de découpe d3, qui est parallèle aux lignes de découpe 6, 7. Cette direction de découpe d3 fait un angle de 90° avec la direction longitudinale D de la nappe continue segmentée 5. Ainsi, dans ce pli discret segmenté 8, les fibres sont orientées selon un angle $\alpha$ égal à 90° avec la direction principale d3.

D'autres angles de découpe pourront être envisagées. De plus, les lignes de découpe 6, 7 ne sont pas nécessairement parallèles entre elles, pouvant ainsi également former des plis discrets segmentés 8 en formes de triangles ou trapèzes. En particulier, dans d'autres mode de réalisation de l'invention, les lignes de découpe transversales pourront être orientées par rapport à la direction longitudinale D de telle sorte que, dans chacun des plis unitaires préimprégnés, les fibres seront orientées à +60°, ou à -60°, à +30°, ou à -30°, ou encore à 90° par rapport à une direction principale définie par les côtés découpés du pli discret segmenté 8.

Dans la suite de cette demande, les plis discrets segmentés 8 formés par découpe transversale de la nappe continue segmentée 5 pourront être dénommés « plis traités », les deux expressions étant considérées comme synonymes.

## PLI DISCRET SEGMENTE 8

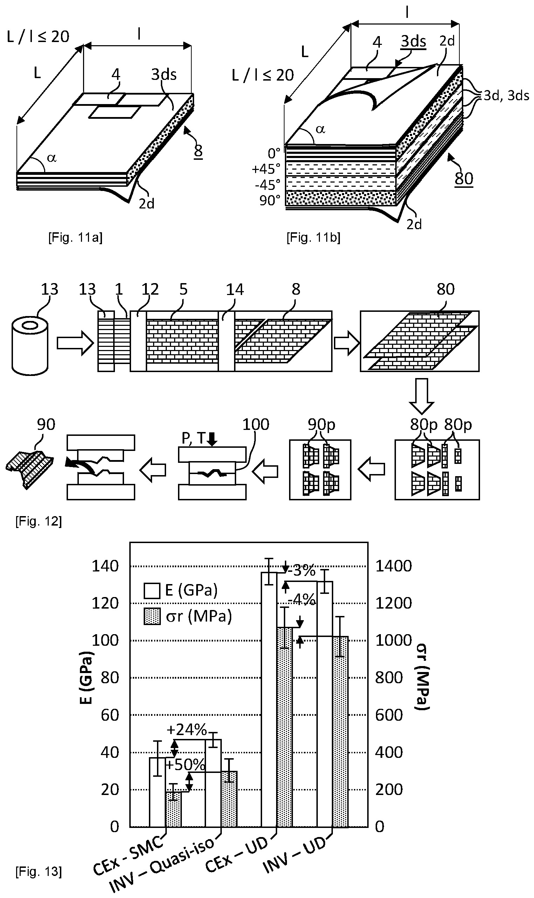

Un pli discret segmenté 8 (ou pli traité) obtenu par le procédé décrit ci-dessus a une géométrie discrète inscrite dans un rectangle de longueur (L) et de largeur (l) de rapport de la longueur sur la largeur (L / l) inférieur ou égal à 20 (i.e., L /l ≤ 20). Comme illustré à la Figure 11(a), le pli traité comprend,

- une couche préimprégnée segmentée discrète 3ds ayant une épaisseur et étant constituée de fibres unidirectionnelles disposées parallèlement à la direction longitudinale (D), les fibres étant noyées dans une matrice de résine, et

- une doublure antiadhésive discrète 2d appliquée sur une face de la couche préimprégnée segmentée discrète 3ds.

La couche préimprégnée segmentée discrète 3ds -et non la doublure antiadhésive discrète 2d- comprend des segments 4 découpés sur toute son épaisseur et disposés en quinconce. Les segments ainsi découpés donnent au pli discret segmenté 8 une souplesse et drapabilité supérieure à la plupart des plis préimprégnés unidirectionnels de fibres longues disponibles sur le marché. Dans une variante préférée, les segments ont une géométrie comprenant deux côtés opposés parallèles à la direction longitudinale (D) présentant des dimensions identiques au sein du pli discret segmenté. La géométrie des segments est inscrite dans un rectangle avec une longueur mesurée le long de la direction longitudinale (D) et une largeur mesurée dans une direction perpendiculaire à la direction longitudinale.

La longueur mesurée le long de la direction longitudinale (D du rectangle dans lequel est inscrit chaque segments 4 peut être comprise entre 10 mm et 200 mm, de préférence entre 50 et 150 mm, encore de préférence entre 70 et 130 mm ou sensiblement égale à 100 mm. La largeur du rectangle dans lequel est inscrit chaque segment peut être inférieure ou égale à la longueur et peut être comprise entre 5 mm et 100 mm, de préférence entre 8 et 50 mm ou sensiblement égale à 10 mm. Plus la largeur est petite, plus le pli traité est souple dans la direction normale à la direction longitudinale (D).

Découper les segments dans une direction transverse à la direction longitudinale (D) réduit réduit aussi la longueur des fibres et donc, d'une part, augmente considérablement la flexibilité du plis segmenté discret dans une direction parallèle au pli et perpendiculaire à la direction longitudinale (D) qui peut être utilisé pour produire des composites à formes complexes mais, d'autre part, en-dessous d'une certaine longueur de fibres, cela réduit les propriétés mécaniques du composite formé à partir de tels plis. Il faut donc bien déterminer selon l'application, et le système fibres / matrice utilisé, la longueur optimale des segments 4

Par contre, découper les segments parallèlement à la direction longitudinale (D) et à la direction des fibres n'affecte que très peu les propriétés mécaniques du composite produit à partir d'un tel pli traité, puisque les fibres ne sont que très peu endommagées. Les découpes longitudinales confèrent de la souplesse au pli traité dans la direction longitudinale (D) (càd, on peut plier plus facilement un pli autour d'un axe parallèle à l'axe longitudinal (D)).

. Plus la longueur des segments est grande, plus le transfert de contraintes entre la résine (ou matrice) et les fibres est efficace et les propriétés mécaniques sont élevées. Ceci se fait cependant au détriment de la drapabilité des plis traités dans la direction normale à la direction longitudinale (D).

Par exemple, les segments (4) peuvent avoir une forme rectangulaire ou trapézoïdale. Dans une variante préférée les segments ont une forme rectangulaire, avec les 'petits côté' définissant la largeur du rectangle sont courbes, de préférence semi-circulaires, formant un petit côté concave à une extrémité du segment et un petit côté convexe à l'autre extrémité, le petit côté convexe épousant la géométrie du petit côté concave. Cette géométrie confère au pli discret segmenté une plus grande flexibilité dans le plan du pli, permettant de courber les segments comme une chaîne dont les maillons formés par les sehments sont reliés entre eux par des charnières formées par les petits côtés concaves épousant les petits côtés convexes.

La doublure antiadhésive discrète (2d) adhère suffisamment à la couche préimprégnée segmentée discrète (3ds) pour assurer que les segments de la couche préimprégnée segmentée discrète 3ds ne se déplacent ou ne tombent lors de manipulation du pli traité. La doublure antiadhésive discrète (2d) doit cependant être facilement retirée lors de l'empilement de plis traités 8 pour former un matelas multicouche segmenté discret 80 composé d'un empilement de couches préimpregnées discrètes 3d comprenant au moins une couche préimprégnée segmentée discrète 3ds.

Le pli discret segmenté 8 peut avoir une géométrie de rectangle (ou carré), de parallélogramme (ou losange), de triangle ou de trapèze selon les angles de découpe (α). En contrôlant l'angle de découpe (α), on peut contrôler l'angle formé par les fibres avec les côtés découpés selon l'angle de découpe du pli discret segmenté 8. On a ainsi deux repères clairs pour orienter les fibres selon un angle de renfort (β) lors de la production de matelas multicouches segmentés discrets 80 en empilant des plis discrets segmentés 8 :

- les côtés du ruban continu 15 sont parallèles aux fibres et

- les côtés découpés forment un angle (α) avec les fibres.

En alignant les cotés du ruban continu ou les cotés découpés, on peut contrôler la séquence d'angles de renfort (β) dans l'empilement formant un matelas multicouche segmenté discret 80.

**MATELAS MULTICOUCHE SEGMENTE DISCRET 80**

Les plis discrets segmentés 8 décrits plus haut sont utilisés pour fabriquer un matelas multicouche segmenté discret 80. Comme illustré à la Figure 11(b), le matelas multicouche segmenté discret 80 selon la présente invention est composé d'un empilement de couches préimpregnées discrètes 3d comprenant, d'une part,

- (N+1) couches préimprégnées discrètes 3d de fibres unidirectionnelles noyées dans une matrice de résine, les (N+1) couches préimprégnées discrètes étant empilées les unes sur les autres et

- une doublure antiadhésive discrète 2d appliquée sur une face libre de chacune d'une première et d'une (N + 1)$^{ème}$ couches préimprégnées discrètes, enfermant en sandwich les (N+1) couches préimprégnées discrètes.

Le matelas multicouche segmenté discret 80 de la présente invention se distingue des matelas multicouches discrets de l'art antérieur en ce qu'au moins une des (N+1) couches préimprégnées discrètes 3d, de préférence toutes les (N+1) couches préimprégnées discrètes 3d sont des couches préimprégnées segmentées discrètes 3ds telles que définies plus haut en référence aux plis discrets segmentés 8 préimprégnés. Ils se distinguent également en ce que au moins une couche préimprégnée segmentée discrète 3ds a une géométrie de triangle, de trapèze ou de parallélogramme, de préférence de losange. Un rectangle est un parallélogramme avec quatre angles droits et un carré est un losange avec quatre angles droits. La géométrie de la couche préimprégnée segmentée discrète 3ds peut être un trapèze ou parallélogramme ayant au moins deux angles différents de 90°.

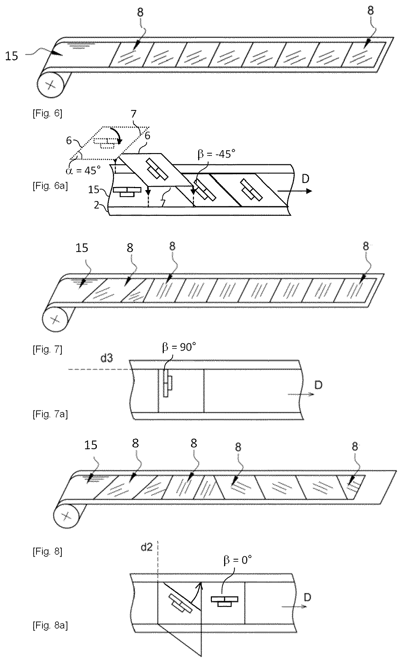

De telles géométries de plis sont obtenues lors de la fabrication de plis discrets segmentés 8 en découpant la nappe segmentée continue 5 le long de deux lignes de découpe 6, 7 parallèles à des directions de découpe (d1, d2, d3), chacune des directions de découpe formant un angle de découpe ($\alpha$) avec la direction longitudinale (D). Ceci est avantageux, car le côté du pli discret segmenté découpé le long de la direction de découpe (d1) formant un angle ($\alpha$) définit une référence permettant lors de l'empilement d'un pli discret segmenté 8 sur une couche préimprégnée discrète 3d, de définir avec exactitude un angle de renfort ($\beta$) désiré par rapport à la direction des fibres dans les couches adjacentes, en alignant les côtés correspondants du pli discret segmenté 8 et de la couche préimprégnée discrète 3d. L'angle de renfort ($\beta$) n'est pas nécessairement égal à l'angle de découpe ($\alpha$) car, comme illustré à la Figure 6a, on peut faire tourner le pli discret segmenté 8 avant de le poser sur la couche préimprégnée discrète 3d avec un côté aligné avec le côté correspondant de cette dernière. Ainsi, il est par exemple possible de faire tourner un pli discret segmenté 8 dont l'angle de découpe $\alpha$ est de 90° ou $\pm$45°, d'un multiple (n) de 45° avec n = 0 à 4 pour obtenir un angle de renfort $\beta = \alpha + n\ 45°$, avec n = 0 à 4. Grâce aux angles de découpe ($\alpha$) et la rotation du pli discret segmenté 8, on peut obtenir des matelas multicouches segmentés discrets 80 dont les angles de renfort ($\beta$) varient selon la couche du matelas multicouche segmenté discret 80, tout en commençant par une nappe monocouche continue 1, qu'on alimente dans la ligne de production avec les fibres toujours alignées à la direction longitudinale (D) sans l'assistance d'une machine de placement automatique de fibres (AFP). Ceci est beaucoup plus efficace que d'orienter les fibres avec une machine de placement automatique de fibres (AFP) lors de la production d'une nappe segmentée continue 5. De plus, un même poste de découpe 12 peut être utilisé sans le bouger pour former les segments, quelle que soit l'angle de renfort ($\beta$) que le pli discret segmenté 8 prendra dans le matelas multicouche segmenté discret 80.

Une machine de placement automatique de fibre (AFP) sont optimisées pour fabriquer des pièces de grandes dimensions et sont mal adaptées pour placer des fibres ou tapes sur des bandes de petites dimensions, comme il est souvent nécessaire d'utiliser pour des pièces à géométrie complexe. Comme il est difficile d'automatiser à une échelle industrielle la formation de sous-préformes et préformes finales pour des pièces à géométrie complexe et de taille généralement trop petite pour qu'une machine AFP soit efficace, la présente invention a déplacer l'étape d'automatisation plus en amont de la formation de la sous-préforme ou préforme finale. C'est ainsi que l'étape de découper des segments 4 sur une nappe monocouche continue (1) alimentée en continu le long de la direction longitudinale (D) qulque soit l'angle de renfort ($\beta$) désiré.

Ainsi par exemple, si l'angle de découpe ($\alpha$) est de 90°, on peut facilement empiler le plis discret segmenté 8 avec un angle de renfort ($\beta$) de 0° ou de 90°, simplement en alignant un côté découpé ou un côté non découpé avec la direction longitudinale (D), par exemple en l'alignant avec la couche préimprégnée discrète sur laquelle on pose le pli discret segmenté 8, en le tournant ou pas de 90°. Dans un autre exemple, en découpant un losange avec un angle de découpe, $\alpha = 45°$, on peut facilement empiler le pli discret segmenté 8 de soirte à obtenir un angle de renfort, $\beta = 0°$ ou 45°.

**PROCEDE DE FABRICATION D'UN RUBAN CONTINU D'EMPILEMENTS DISCRETS ET DE MATELAS MULTICOUCHES SEGMENTES DISCRETS (80)**

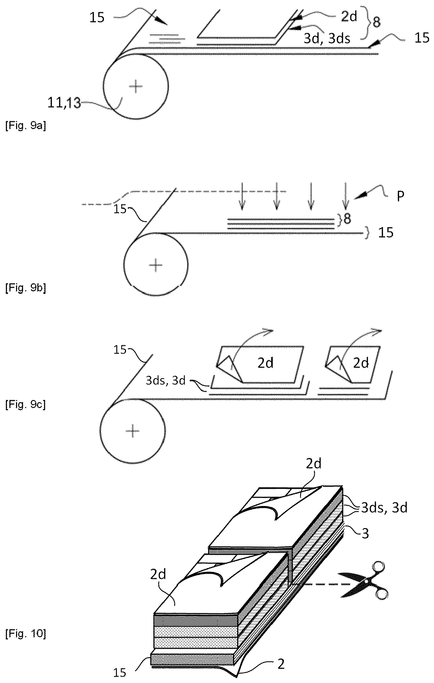

Dans une première variante de la présente invention, un matelas multicouche segmenté discret 80 peut être produit à partir d'un ruban continu d'empilements discrets tel qu'illustré à la Figure 10, en déposant une série d'empilements de N couches préimprégnées discrètes sur un ruban continu 15, comme illustré aux Figures 5 à 10. Au moins une des N couches préimprégnées discrètes 3d, de préférence toutes les N couches préimprégnées discrètes 3d sont des couches préimprégnées segmentées discrètes 3ds. Le procédé de cette variante comprend les étapes suivantes.

Un ruban continu (15) est fourni, constitué d'une nappe monocouche continue 1 ou d'une nappe continue segmentée 5, ou encore une doublure antiadhésive continue (2) telles que définies en relation au procédé de fabrication d'un pli discret segmenté 8, supra. On dépose sur une face du ruban continu 15 ne comprenant pas la doublure antiadhésive continue 2 ou sur la doublure antiadhésive continue (2) si le ruban continu (15) est formé par une doublure antiadhésive continue (2), une série d'empilements composés chacun de N couches préimprégnés discrètes 3d empilées les unes sur les autres, où $N \in \mathbb{N}$ et $N \geq 1$, pour former le ruban continu d'empilements discrets. Chaque empilement est déposé sur le ruban continu par les étapes suivantes

On fournit N plis préimprégnés discrets comprennent chacun, d'une part,

- la couche préimprégnée discrète 3d qui comprend des fibres unidirectionnelles noyées dans une matrice de résine, et

- une doublure antiadhésive discrète (2d) appliquée sur une face de la couche préimprégnée discrète (3d),

Ensuite, on dépose séquentiellement sur le ruban continu 15 les N plis préimprégnés discrets en retirant la doublure antiadhésive discrète 2d de chaque pli préimprégné discret, avant de poser un nouveau pli préimprégné discret sur celui-ci et optionnellement compacter les plis préimprégnés discrets ainsi empilés, de telle sorte que,

- la couche préimprégnée discrète 3d d'un premier pli préimprégné discret 3d soit en contact avec la couche préimprégnée continue 3 du ruban continu 15 sur lequel le premier pli préimprégné discret est posé,

- la couche préimprégnée discrète 3d des second au $N^{ème}$ plis préimprégnés discrets soient en contact avec la couche préimprégnée discrète 3d des plis-préimprégnés discrets adjacents avec lesquels ils sont en contact,

- la $N^{ème}$ couche préimprégnée discrète 3d a une face libre sur laquelle est déposée la doublure antiadhésive discrète 2d, formant ainsi le $N^{ème}$ pli préimprégné discret.

Selon la présente invention, au moins un pli préimprégné discret, de préférence tous les plis préimprégnés discrets sont des plis discrets segmentés 8 obtenus par le procédé décrit plus haut, dans lequel la couche préimprégnée discrète 3d est formée par la couche préimprégnée segmentée discrète 3ds.

Une série de matelas multicouches segmentés discrets 80 comprenant chacun (N + 1) couches préimpregnées discrètes 3d peut être obtenue simplement en découpant le ruban continu 15 du ruban continu d'empilements discrets entre deux empilements discrets adjacents, comme illustré à la Figure 10.

En référence aux figures 5 à 9, il est représenté, à titre d'exemple non limitatif et de manière schématique, différentes étapes du procédé de fabrication défini supra permettant de former un ruban continu 15 d'empilements discrets.

Dans une première étape, illustrée sur la figure 5, un ruban continu 15 est déroulé depuis une bobine 13 vers un poste de dépose (non représenté) de plis discrets préimprégnés. Dans l'exemple représenté, le ruban continu 15 est une nappe continue segmentée 5 comportant des segments 4 formés par découpe de la couche préimprégnée continue 3 (mais pas de la doublure antiadhésive continue 2). Il est toutefois envisageable dans d'autres modes de réalisation de l'invention de déposer les plis discrets préimprégnés sur un ruban continu 15 formé par une nappe monocouche continue 1 ne comportant pas de segments 4.

L'idée de ce procédé de la présente invention est de déposer sur une face du ruban continu 15 ne comprenant pas la doublure antiadhésive continue 2 une série d'empilements de N plis préimprégnés discrets posés côte à côte sur le ruban continu 15 pour former un ruban continu 15 d'empilements discrets qui pourra être enroulé pour former une bobine facile à stocker et à transporter. Quand nécessaire, le ruban continu 15 peut être découpé entre deux empilements discrets adjacents pour obtenir des matelas multicouches segmentés discrets 80. Chaque empilement discret est formé de N couches préimprégnées discrètes empilées les unes sur les autres, dont au moins une, de préférence toutes les N couches préimprégnées discrètes 3d de chaque empilement est une couche preimprégnée segmentée discrète 3ds. Le nombre N de couches préimprégnées discrètes peut varier d'un empilement à l'autre, mais en général, il est préféré que tous les empilements discrets d'un même ruban continu 15 d'empilements discrets sont formés d'un même nombre N de couches préimprégnées discrètes 3d,3ds.

Dans une deuxième étape de ce procédé de la présente invention, dont une variante spécifique est illustrée sur la figure 6, une série de plis traités 8, conformes à ceux représentés sur la figure 2, sont déposés sur le ruban continu 15. Lors de cette dépose, chacun des plis traités 8 est orienté de telle sorte que sa couche de fibres entre en contact avec la couche de fibres du ruban continu 15. Il est préféré de déposer la face du pli préimprégné discret ne comportant pas de doublure antiadhésive discrète 2d du pli préimprégné discret en contact avec la face du ruban continu 15 et de retirer la doublure antiadhésive discrète 2d seulement après que le pli ait été déposé. Si cela n'est pas possible, il faut retirer la doublure antiadhésive discrète 2d avant de déposer le pli préimprégné discret sur le ruban continu 15, en faisant attention à ce que les segments 4 demeurent en place s'il s'agit d'un pli traité 8.

Cette dépose pourra s'opérer selon le mode opératoire représenté sur les figures 9a à 9c. Lors d'une première opération représentée sur la figure 9a, un premier pli préimprégné discret à déposer est orienté de telle sorte que sa doublure antiadhésive discrète 2d est positionnée au-dessus, sa couche préimprégnée discrète 2d, 2ds reposant sur la couche préimprégnée continue du ruban continu 15. Lors d'une deuxième opération représentée sur la figure 9b, le complexe formé par le ruban contiinu 15 recouvert du premier pli préimprégné discret est compacté sous l'effet d'une pression mécanique (P) exercée sur la surface supérieure du pli préimprégné discret. Ce compactage pourra également s'opérer au moyen d'un vide créé au-dessus du premier pli préimprégné discret. Lors d'une troisième opération représentée sur la figure 9c, la doublure antiadhésive discrète 2d du premier pli préimprégné discret est retirée, laissant la couche préimprégnée discrète du premier pli préimprégné discret apparente sur la partie supérieure de l'empilement en formation.

Dans une troisième étape, illustrée sur la figure 9c, une série de plis préimprégnés discrets comprenant au moins un pli traité, de préférence tous les plis préimprégnés discrets y compris le premier pli préimprégné discret sont des plis traités 8 (i.e., des plis discrets segmentés 8), par exemple, conformes à ceux représentés sur la figure 4, sont déposés soit directement sur le ruban continu 15, soit sur le premier pli préimprégné discret préalablement déposé sur le ruban continu 15. Lors de cette dépose, chacun des plis préimprégnés discrets est orienté de telle sorte que sa couche préimprégnée discrète 3d, 3ds entre en contact avec la couche préimprégnée discrète 3d, 3ds du ruban continu 15 ou avec la couche préimprégnée discrète 3d, 3ds de la première couche préimprégnée discrète.

En tournant chacun des un à N plis préimprégnés segmentés discrets 8 avant de le déposer sur un même empilement discret, on peut varier la séquence d'angles de renfort ($\beta$) des fibres de chaque pli. En sélectionnant l'angle de découpe ($\alpha$), on peut facilement obtenir un angle de renfort ($\beta$) avec les fibres d'une couche préimprégnée (segmentée) discrète adjacente 3d, 3ds en alignant un côté du pli discret segmenté 8 découpé selon la direction de découpe (d1, d2, d3) avec un côté de la couche préimprégnée (segmentée) discrète adjacente (3d, 3ds).

Sur la Figure 8a, l'angle de découpe, $\alpha$ = 90° entre la direction longitudinale (D) et chacune des deux lignes de découpe 6, 7 du pli préimprégné segmenté discret 8, formant un rectangle (ou carré). En déposant le pli discret segmenté 8 avec ses deux côtés découpés formant un angle de 90° avec la direction longitudinale (D) définie par le ruban continu, on obtient une couche préimprégnée segmentée discrète dont l'angle de renfort, $\beta$ = 0°. A la Figure 7a, on voit qu'une rotation de 90° du même pli qu'à la Figure 8a donne une couche préimprégnée segmentée discrète 3ds formant un angle de renfort, $\beta$ = 90°.

On peut empiler des plis discrets segmentés 8 en forme de parallélogramme ou de préférence de losange, comprenant des lignes de découpe 6, 7, formant un angle de découpe $\alpha$ = 45°, avec des angles de renfort, $\beta$ = 0° ou 45° comme illustré à la Figure 6a.

On peut ainsi, par exemple, former un empilement unidirectionnel, avec les fibres de tous les plis préimprégnés discrets orientés à 0° adaptée à la production d'une pièce à géométrie complexe qui sera surtout sollicitée selon la direction longitudinale (D). On peut aussi, par exemple, former un empilement quasi-isotrope avec des séquences d'angles de renfort de (+45° / 0° /-45°/90°) et son miroir par unité d'empilement discret constitué chacune de 4 couches préimprégnées discrètes. Toute autre séquence d'angles de renfort ($\beta$) est possible selon la géométrie et le cahier des charges de la pièce à produire.

Dans une quatrième étape, illustrée sur la figure 8, une série de plis traités 8, conformes à ceux représentés sur la figure 3, sont déposés soit directement sur le ruban continu 15, soit sur les couches préimprégnées (segmentées) discrètes préalablement déposés sur le ruban continu 15. Lors de cette dépose, chacun des plis traités 8 est orienté de telle sorte que sa couche préimprégnée (segmentée) discrète 3d, 3ds entre en contact avec la couche préimprégnée (segmentée) discrète 3d, 3ds du ruban continu 15 ou avec la couche préimprégnée (segmentée) discrète 3d, 3ds du dernier pli traité 8 ou pas d'un empilement en formation.

En découpant le ruban continu 15 du ruban continu d'empilements discrets entre deux empilements discrets adjacents on obtient une série de matelas multicouches segmentés discrets 80. Chaque matelas multicouche segmenté discret ainsi obtenu est donc formé de (N + 1) couches préimprégnées discrètes, dont N couches préimprégnées discrètes sont formées par les N plis préimprégnés discrets de chaque empilement discret + une couche préimprégnée discrète est formée par le ruban continu 15 qui a été découpé (cf. Figure 10).

En référence à la figure 10, il est représenté le ruban continu d'empilements discrets obtenu par le procédé de fabrication tel que décrit ci-dessus en référence aux figures 5 à 9. Ce ruban continu d'empilements discrets est notamment constitué d'un ruban continu 15 dans lequel les fibres sont orientés à 0° par rapport à la direction longitudinale D, de couches préimprégnées discrètes 3d, 3ds dans laquelle les fibres sont orientées à différents angles de renfort ($\beta$) par rapport à la direction longitudinale D.

La fabrication d'un ruban continu 15 du ruban continu d'empilements discrets tels qu'illustré à la Figures 10 permet de stocker des matelas multicouches segmentés discrets 80 en enroulant le ruban continu 15 sous forme d'une bobine. Si le nombre N de couches formant les empilements est trop élevé, il sera difficile d'enrouler le ruban continu d'empilements discrets sous forme d'une bobine de rayon raisonnable. Dans ce cas, un autre procédé de fabrication d'un matelas multicouche segmenté discret 80 discuté ci-dessous peut être utilisé à la place.

## PROCEDE DE FABRICATION D'UN MATELAS MULTICOUCHE SEGMENTE DISCRET (80)

Un procédé alternatif pour fabriquer des matelas multicouches segmentés discrets 90 comprend la fourniture de (N+1) plis préimprégnés discrets comprenant chacun, d'une part,

- une couche préimprégnée discrète 3d qui comprend des fibres unidirectionnelles noyées dans une matrice de résine, et

- une doublure antiadhésive discrète 2d appliquée sur une face de la couche préimprégnée discrète 3d,

Un premier pli préimprégné discret 3d est posé sur un support sur la doublure antiadhésive, exposant ainsi la couche préimprégnée discrète 3d. Ensuite on dépose séquentiellement sur le premier pli préimprégné discret 3d N plis préimprégnés discrets en retirant la doublure antiadhésive discrète 2d de chaque pli préimprégné discret, avant de poser un nouveau pli préimprégné discret sur celui-ci. On peut optionnellement compacter les plis préimprégnés discrets ainsi empilés à chaque fois qu'on en rajoute un ou plusieurs. On obtient ainsi un empilement tel que,

- la couche préimprégnée discrète 3d de chaque pli préimprégné discret 3d soit en contact avec la couche préimprégnée discrète 3d des plis-préimprégnés discrets adjacents avec lesquels ils sont en contact,

- une (N+1)ème couche préimprégnée discrète 3d a une face libre sur laquelle est déposée la doublure antiadhésive discrète 2d, formant ainsi le (N+1)ème pli préimprégné discret.

Le procédé de fabrication d'un matelas multicouche segmenté discret 90 de la présente invention se distingue des procédés de l'art antérieur en ce qu'au moins un pli préimprégné discret, de préférence tous les plis préimprégnés discrets sont des plis discrets segmentés 8 tels que décrits plus haut dont la couche préimprégnée discrète 3d est formée par la couche préimprégnée segmentée discrète 3ds.

Dans une variante préférée des deux procédés décrits plus haut, les fibres d'une couche préimprégnée discrète 3d donnée forment un angle de renfort ($\beta$) compris entre 0 et 180° (i.e., $\beta$ = 0 à 180°) avec les fibres une couche préimprégnée discrète 3d du même empilement discret qui est adjacente à et en contact avec la couche préimprégnée discrète 3d donnée. Si toutes les couches préimprégnées discrètes 3d d'un matelas multicouche segmenté discret sont les couches préimprégnées segmentées discrètes 3ds dont les angles de découpe sont de 90° ou $\pm45°$, alors il est préféré que les angles de renfort ($\beta$) soient égaux à l'angle de découpe ($\alpha$) additionné d'un multiple (n) de 45° avec n = 0 à 4 (i.e. $\beta = \alpha$ + n 45°, avec n = 0 à 4). Ainsi on peut contrôler l'angle de renfort ($\beta$) de chaque couche préimprégnée segmentée discrète 3ds lors de son empilement, en alignant les côtés correspondants du pli discret segmenté 8 et de la couche préimprégnées segmentées discrètes 3ds sur laquelle le pli discret segmenté 8 est posé.

## PROCEDE DE FABRICATION D'UNE PIECE COMPOSITE (90)

Le matelas multicouche segmenté discret 80 de la présente invention rend possible la production de pièces composites à hautes performances ayant des géométries complexes. Grâce aux segments 4 découpés dans les couches préimprégnées segmentées discrètes 3ds, le matelas multicouche segmenté discret 80 peut s'adapter à et épouser des formes complexes de moules, tout en gardant un bon alignement des fibres de renfort le long de leurs angles de renfort ($\beta$) respectifs.

La Figure 12 illustre un procédé pour fabriquer une pièce composite à haute preformance et de géométrie complexe. Les étapes de la ligne supérieure de la Figure 12 illustrent la fabrication d'un matelas multicouche segmenté discret 80 selon la présente invention et déjà largement discutée plus haut. A partir d'un matelas multicouche segmenté discret 80 ayant la séquence d'angles de renfort ($\beta$) désirée, on peut le découper pour former une sous-préforme 80p dont la géométrie est adaptée à une géométrie de la pièce composite 90. Si nécessaire, on peut assembler différentes sous-préformes 80p pour former une préforme finale 90p de la pièce composite. Cette étape est optionnelle et peut servir, par exemple, si des surépaisseurs ou des angles de renfort ($\beta$) particuliers sont localement nécessaires. La sous-préforme 80p ou la préforme finale 90p est alors déposée dans un moule 100 chauffé à la température de mise en oeuvre (T). On applique de la pression en maintenant la température de mise en oeuvre afin de consolider la sous-préforme 80p ou la préforme finale 90p et ainsi former la pièce composite 90. La consolidation sous pression et température peut se faire dans un moule à compression, sous vide (= vacuum bagging), ou dans un autoclave, selon la taille de la pièce, l'état de surface désiré ou la pression nécessaire pour une bonne consolidation de la pièce. Après un temps de mise en oeuvre, on diminue la pression à zéro, on ouvre le moule et la pièce composite 90 peut être retirée du moule.

Si la matrice est une résine thermodurcie, on peut maintenir le moule à la température de mise en oeuvre, prêt à recevoir une nouvelle sous-préforme 80p ou préforme finale 90p, après nettoyage du moule, si nécessaire. Si la matrice est un polymère thermoplastique, il faut baisser la température du moule en-dessous de la température de solidification de la matrice, par exemple en-dessous de la température de crystallisation pour les polymères semi-cristallins, tels que PEEK, PEKK, PA, PEI, PBS, etc.

Avec ce procédé, des pièces composites à hautes performance de géométrie complexe avec des fibres longues orientées selon tout schéma désiré peuvent être facilement produites. Par exemple, une pièce composite quasi-isotrope peut être produite avec un matelas multicouche segmenté discret 80 ou un préforme finale 90p dont les angles de renfort ($\beta$) varient entre les couches préimprégnées discrètes 3d entre 0°, $\pm$45°, et 90°. De manière alternative, une pièce composite quasi orthotrope peut être produite avec un matelas multicouche segmenté discret 80 ou préforme finale 90p dont toutes les fibres sont orientées suivant un même angle de renfort ($\beta$) de 0°, formant ainsi un composite unidirectionnel (UD), Enfin, entre ces deux configurations extrêmes toute configuration mixte peut être obtenue avec un matelas multicouche segmenté discret 80 ou une préforme finale 90p dont les angles de renfort ($\beta$) varient entre les couches préimprégnées discrètes 3d selon les propriétés mécaniques localement désirées.

## EXEMPLES

Des matelas multicouches segmentés discrets 80 ont été produits à partir de nappes monocouches continues 1 d'epoxy renforcé par des fibres de carbone unidirectionnelles de grade aéronautique disponibles chez Hexcel,. Des plis discrets segmentés 8 préimprégnés selon la présente invention ont été produits en découpant des segments 4 dans la couche préimprégnée continue 1. Les segments sont réctangulaires de dimensions 50 $\times$ 8 mm disposés en quinconce.

Des matelas multicouches segmentés discrets 80 quasi-isotropes ont été produits avec quatre plis discrets segmentés 8 préimprégnés ainsi obtenus, avec une séquence d'angles de renfort ($\beta$) de 0° / +45° / 90° / -45°. Des plaques de composites quasi isotropes ont été produites par moulage par compression. Les échantillons sont référés dans la Figure 13 comme « INV-Quasi-iso ».

Des matelas multicouches segmentés discrets 80 unidirectionnels ont été produits avec quatre plis discrets segmentés 8 préimprégnés ainsi obtenus, avec toutes les fibres orientées dans la même direction avec un angle de renfort ($\beta$) de 0°. Des plaques de composites unidirectionnelles (= UD) ont été produites par moulage par compression. Les échantillons sont référés dans la Figure 13 comme « INV-UD ».

Des plaques de composites ont été produites par moulage par compression avec des nappes de SMC disponibles chez HEXCEL sous le nom de HexMC Aero, 8552. Les échantillons sont référés dans la Figure 13 comme « CEx-SMC ».

Enfin, des plaques de composites unidirectionnelles (= UD) ont été produites par moulage par compression à partir des nappes monocouches continues 1 utilisées pour produire les plis discrets segmentés 8, mais sans découper de segments. Les échantillons sont référés dans la Figure 13 comme « CEx-UD ».

Des échantillons de traction (= « dog-bone tensile samples » en anglais) ont été découpés dans chacune des plaques INV-Quasi-iso, CEx-SMC, INV-UD et CEx-UD avec, sauf pour l'échantillon CEx-SMC, la partie centrale parallèle aux fibres orientées à l'angle de renfort ($\beta$) de 0°. Ils ont été testés en traction selon ASTM D3039, avec une contrainte appliquée en traction parallèle à l'angle de renfort ($\beta$) de 0°. Les résultats de module d'Young (E) et de résistance à la traction ($\sigma t$) à la rupture sont représentés dans le graphe de la Figure 13.

En comparant les tests effectués sur les échantillons unidirectionnels, INV-UD et CEx-UD, on voit que le module d'Young ne baisse que de -3% et la contrainte à la rupture ($\sigma t$) de -4% pour les composites INV-UD fabriqués à partir de matelas multicouches segmentés discrets 80 unidirectionnels formés de couches segmentées discrètes par rapport au composites unidirectionnels CEx-UD (i.e., non-segmentés) qui sont la référence maximale en aéronautique. On peut donc en conclure que la segmentation de la couche préimprégnée continue 3 n'a que peu d'effet sur la rigidité et la résistance à la rupture des pièces ainsi formées. Par contre, la segmentation permet de produire des pièces composites unidirectionnelles de géométries beaucoup plus complexes qu'il n'est possible actuellement avec des empilements de nappes monocouches continues 1 non segmentées correspondant à l'essai CEx-UD.

Les SMC sont pour l'instant, pratiquement la seule solution de production de pièces composites à fibres longues ayant une géométrie complexe utilisée dans l'industrie aéronautique. En comparant les propriétés mécaniques en traction des échantillons CEx-SMC dont l'orientation des fibres est aléatoire, avec les échantillons INV-Quasi-iso (= +45°/0°/ -45° / 90°), on observe une augmentation de 24% du module d'Young (E) et de 50% de la résistance à la rupture ($\sigma t$) pour les plaques INV-Quasi-iso, ce qui est considérable. On peut donc en conclure que pour une drapabilité comparable, permettant de fabriquer des pièces de complexités géométriques comparables, et des propriétés quasi-isotropes, les composites produits à partir de matelas multicouches segmentés discrets 80 selon la présente invention ont des propriétés mécaniques considérablement supérieures à celles de composites produits à partir de SMC.

De plus, la dispersion de résultats des propriétés mécaniques de composites produits à partir de SMC est beaucoup plus importante que pour les composites produits à partir de matelas multicouches segmentés discrets 80 selon la présente invention. Ceci est clairement visible en comparant les barres d'erreur (écart type) indiquées à la Figure 13 pour les échantillons CEx-SMC et INV-Quasi-iso. Ceci s'explique facilement. Comme les fibres dans les SMC sont orientées de manière aléatoire, les propriétés des échantillons dépendent fortement de l'orientation locale des fibres. Ceci conduit à des variations de résultats importantes selon l'endroit de la plaque composite ainsi produite où sont découpés les échantillons. Une plus grande variation des résultats n'a pas qu'une importance théorique, mais est très importante car le dimensionnement des pièces doit prendre en compte l'écart-type et adapter le facteur de sécurité en conséquence.

Ces résultats montent que les matelas multicouches segmentés discrets 80 de la présente invention, obtenus à partir de plis discrets segmentés 8 préimprégnés selon la présente invention permettent de fabriquer des pièces composites à haute performance et longues fibres combinant à la fois,

- de bonnes propriétés mécaniques et

- la possibilité de former des pièces à géométries complexes.

On estime que dans l'aéronautique, la production de grande pièces composites à géométrie simple à partir d'empilements de nappes monocouches préimprégnées génère environ 70 kg de chutes par avion de passagers. Ces chutes sont généralement mal recyclées. Avec le procédé de la présente invention, on peut réutiliser -et non recycler-les chutes pour fabriquer d'autres pièces à hautes performances qui voleront dans l'avion. Ceci représente un progrès énorme dans la gestion des matériaux dans l'aéronautique notamment.

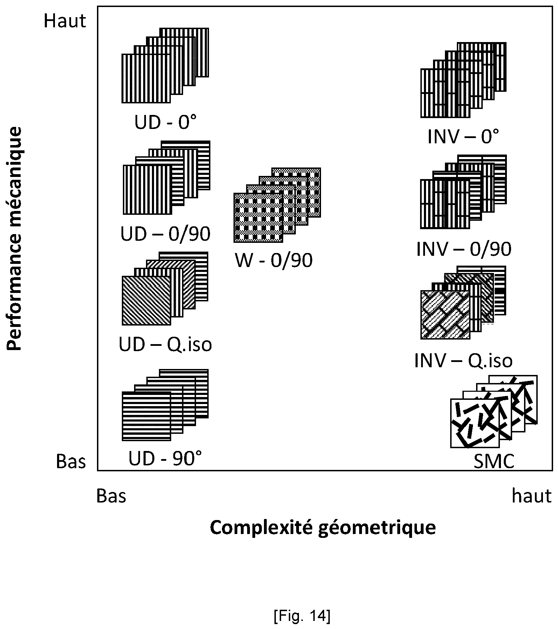

La Figure 14 positionne schématiquement sur un graphe montrant les performances mécaniques d'une pièce composite en fonction de la complexité de la géométrique des pièces processables à partir des différentes préformes représentées. A l'extrême gauche du graphe, représentant les préformes plus rigides ne permettant pas la formation de pièces composites à géométrie complexe, avec des préformes formées par un empilement de préimprégnés unidirectionnels (UD) selon différentes séquences d'angles de renfort (UD - 0°, UD - 90°, UD - 0 / 90, et UD - Q.iso). La préforme UD - 0° est un matelas formé de préimprégnés UD tous alignés avec un angle de renfort de 0°. Elle représente la référence en termes de propriétés mécaniques dans la direction longitudinale (D) (i.e., à 0°) dans l'industrie aéronautique. Elle est cependant handicapée d'une part, par de faibles propriétés mécaniques dans une direction normale aux fibres (voir la préforme UD - 90°) et, d'autre part, par une grande rigidité qui donne très peu de liberté dans la complexité des pièces formées par une telle préforme. Les préformes UD - 0 / 90 et UD - Q.iso (Q.iso = quasi-isotrope) sont également des empilements de préimprégnés UD, mais arrangés dans des séquences (0°/90°) er (+45° / 0° / -45°/90°), respectivement. De telles séquences permettent d'améliorer les propriétés mécaniques dans les autres directions que 0°, mais réduit les propriétés dans la direction longitudinale en fonction de la proportion de fibres qui n'est pas orientée avec un angle de renfort de 0°. Le changement de séquences d'orientation des fibres des préformes formées par des préimprégnés n'a pas d'influence notable sur la souplesse de la préforme. De telles préformes ont donc un potentiel très bas de former des pièces à géométries complexes.

Un empilement de de plis tissés (W-0/90, W = weave) donne un peu plus de souplesse à la préforme, selon le type de tissage (e.g., satin 8), mais pas de manière significative.

Dans le coin inférieur droit, on retrouve les SMC, qui permettent la formation de pièces à géométrie complexe, mais avec des propriétés mécaniques décevantes.

Enfin, à droite, bien en-dessous des SMC, on retrouve des préformes finales selon la présente invention, formées à partir de plis discrets segmentés 8 dans diverses séquences d'angles de renfort (INV - 0°, INV - 0/90, INV - Q.iso). Ces préformes ont des propriétés mécaniques proches de celles obtenues à partir de préimprégnés UD, mais avec une souplesse sensiblement supérieure, qui leur permet d'épouser des formes de moule complexes et de former de pièces composites à géométrie complexe.

Le graphe de la Figure 14 montre qu'un énorme gap en haut à droite du graphe est maintenant rempli grâce à la présente invention.

| Réf. | Description |
|------|-------------|
| 1 | Nappe monocouche continue |
| 2 | Doublure antiadhésive continue |
| 2d | Doublure antiadhésive discrète |

(suite)

| Réf. | Description |
|---|---|
| 3 | Couche préimprégnée continue |
| 3d | Couche préimprégnée discrète |
| 3ds | Couche préimprégnée segmentée discrète |
| 3s | Couche préimprégnée segmentée continue de la nape continue segmentée 5 |
| 4 | Segment |
| 5 | Nappe continue segmentée |
| 6 | Ligne de découpe |
| 7 | Ligne de découpe |
| 8 | Pli discret segmenté |
| 11 | Bobine de nappe monocouche continue (1) |
| 12 | Poste de découpe des segments sur la nappe monocouche continue |
| 13 | Bobine de nappe continue segmentée (5) |
| 14 | Poste de découpe de la Nappe continue segmentée en plis discrets segmentés |
| 15 | Ruban continu |
| 80 | Matelas multicouche segmenté discret |
| 80p | Sous-préforme |
| 90 | Pièce composite |
| 90p | Préforme finale |
| 100 | Moule |
|  |  |
| D | Direction longitudinale |
| d1-d3 | Direction de découpe |
| E | Module de traction |
| P | Pression |
| T | Température |
| $\alpha$ | Angle de découpe |
| $\beta$ | Angle de renfort |

**Revendications**

1.  Procédé de fabrication d'un pli discret segmenté (8) destiné à la formation d'un matelas multicouche segmenté discret, le procédé comprenant les étapes de :

    a) fourniture d'une nappe monocouche continue (1) comprenant,

    • une couche préimprégnée continue (3) constituée de fibres unidirectionnelles disposées parallèlement à une direction longitudinale (D), les fibres étant noyées dans une matrice de résine,
    • une doublure antiadhésive continue (2) appliquée sur une face de la couche préimprégnée continue,

    b) découpe de la nappe monocouche continue (1) fournie à l'étape a) de manière à former dans la couche préimprégnée continue (3) des segments (4) disposés en quinconce et ainsi former une nappe continue segmentée (5), ladite découpe étant réalisée de telle sorte à laisser intacte la doublure antiadhésive continue (2) ;

c) découpe transversale de la nappe continue segmentée (5) obtenue à l'étape b) selon deux lignes de découpe (6, 7) parallèles à des directions de découpe (d1, d2, d3), orientées obliquement par rapport à la direction longitudinale (D), la nappe (5) continue segmentée étant découpée sur l'intégralité de sa largeur et de son épaisseur, y compris la doublure antiadhésive, formant ainsi un pli discret segmenté (8) formé par une couche préimprégnée segmentée discrète (3ds) et la doublure antiadhésive, et dans lequel les lignes de découpe (6, 7) forment un angle de découpe ($\alpha$) avec la direction longitudinale (D);

dans lequel, une nappe continue est une nappe ayant une géométrie inscrite dans un rectangle de longueur (L) et de largeur (l) de rapport la longueur sur la largeur (L /l) supérieur à 20 (i.e., L /l > 20) et un pli discret est un pli ayant une géométrie inscrite dans un rectangle de longueur (L) et de largeur (l) de rapport de la longueur sur la largeur (L /l) inférieur ou égal à 20 (i.e., L / l ≤ 20)

2. Procédé selon l'une des revendications précédentes, dans lequel l'angle de découpe ($\alpha$) est choisi parmi les valeurs suivantes, 90°, +45°, -45°, +60°, -60°, +30°, -30°, à ± 5° près.

3. Procédé selon la revendication 1 ou 2, dans lequel la doublure antiadhésive continue (2) est constituée d'un support en papier recouvert d'une couche à base de silicone.

4. Procédé selon l'une quelconque des revendications 1 à 3 dans lequel les fibres de la couche préimprégnée continue sont constituées par des fibres de carbone, de verre, d'aramide, céramiques, ou naturelles et sont noyées soit,

   • dans une résine thermodurcissable, comprenant de préférence une résine époxyde, soit
   • dans un polymère thermoplastique.

5. Procédé selon l'une quelconque des revendications précédentes dans lequel, dans un même pli discret segmenté (8), les segments (4) ont une géométrie comprenant deux côtés opposés parallèles à la direction longitudinale (D) présentant des dimensions identiques au sein du pli discret segmenté, la géométrie des segments étant inscrite dans un rectangle avec une longueur mesurée le long de la direction longitudinale (D) comprise de préférence entre 10 mm et 200 mm, de préférence entre 50 et 150 mm, encore de préférence entre 70 et 130 mm ou sensiblement égale à 100 mm, et une largeur comprise de préférence entre 5 mm et 50 mm, de préférence sensiblement égale à 8 mm.

6. Procédé selon l'une quelconque des revendications précédentes, dans lequel la nappe monocouche continue (1) provient de chutes non-utilisées dans un procédé antérieur de fabrication de pièces composites.

7. Procédé de fabrication d'un ruban continu d'empilements discrets, comprenant les étapes suivantes :

   a) fournir un ruban continu (15) constitué d'une nappe monocouche continue (1) telle que définie dans la revendication 1a) ou d'une nappe continue segmentée (5) telle que définie dans la revendication 1b), ou une doublure antiadhésive continue (2),
   b) déposer sur une face du ruban continu (15) ne comprenant pas la doublure antiadhésive continue (2) ou sur la doublure antiadhésive continue (2) si le ruban continu (15) est formé par une doublure antiadhésive continue (2), une série d'empilements composés chacun de N couches préimprégnés discrètes (3d) empilées les unes sur les autres, où $N \in \mathbb{N}$ et N ≥ 1, pour former le ruban continu d'empilements discrets, dans lequel chaque empilement est déposé sur le ruban continu par les étapes suivantes

      • fournir N plis préimprégnés discrets comprennent, d'une part,

         ◦ la couche préimprégnée discrète (3d) qui comprend des fibres unidirectionnelles noyées dans une matrice de résine, et
         ◦ une doublure antiadhésive discrète (2d) appliquée sur une face de la couche préimprégnée discrète (3d),

      • déposer séquentiellement sur le ruban continu (15) les N plis préimprégnés discrets en retirant la doublure antiadhésive discrète (2d) de chaque pli préimprégné discret, avant de poser un nouveau pli préimprégné discret sur celui-ci et optionnellement compacter les plis préimprégnés discrets ainsi empilés, de telle sorte que,

◦ la couche préimprégnée discrète (3d) d'un premier pli préimprégné discret (3d) soit en contact avec la couche préimprégnée continue (3) du ruban continu (15) sur lequel le premier pli préimprégné discret est posé,

◦ la couche préimprégnée discrète (3d) des second au N$^{ème}$ plis préimprégnés discrets soient en contact avec la couche préimprégnée discrète (3d) des plis préimprégnés discrets adjacents avec lesquels ils sont en contact,

◦ la N$^{ème}$ couche préimprégnée discrète (3d) a une face libre sur laquelle est déposée la doublure antiadhésive discrète (2d), formant ainsi le N$^{ème}$ pli préimprégné discret,

**Caractérisé en ce que,** au moins un pli préimprégné discret, de préférence tous les plis préimprégnés discrets sont des plis discrets segmentés (8) obtenus par le procédé selon l'une quelconque des revendications 1 à 6, dans lequel la couche préimprégnée discrète (3d) est formée par la couche préimprégnée segmentée discrète (3ds) telle que définie à la revendication 1c),

8.  Procédé selon la revendication 7, comprenant l'étape de découper le ruban continu (15) du ruban continu d'empilements discrets entre deux empilements discrets adjacents pour obtenir une série de matelas multicouches segmentés discrets (80) comprenant chacun (N + 1) couches préimpregnées discrètes (3d).

9.  Procédé de fabrication d'un matelas multicouche segmenté discret (80) comprenant (N + 1) couches préimpregnées discrètes (3d), comprenant les étapes suivantes,

    • fournir (N+1) plis préimprégnés discrets comprenant chacun, d'une part,

        ◦ une couche préimprégnée discrète (3d) qui comprend des fibres unidirectionnelles noyées dans une matrice de résine, et
        ◦ une doublure antiadhésive discrète (2d) appliquée sur une face de la couche préimprégnée discrète (3d),

    • poser un premier pli préimprégné discret (3d) sur la doublure antiadhésive, exposant ainsi la couche préimprégnée discrète (3d),
    • déposer séquentiellement sur le premier pli préimprégné discret (3d) N plis préimprégnés discrets en retirant la doublure antiadhésive discrète (2d) de chaque pli préimprégné discret, avant de poser un nouveau pli préimprégné discret sur celui-ci et optionnellement compacter les plis préimprégnés discrets ainsi empilés, de telle sorte que,

        ◦ la couche préimprégnée discrète (3d) de chaque pli préimprégné discret (3d) soit en contact avec la couche préimprégnée discrète (3d) des plis-préimprégnés discrets adjacents avec lesquels ils sont en contact,
        ◦ une (N+1)$^{ème}$ couche préimprégnée discrète (3d) a une face libre sur laquelle est déposée la doublure antiadhésive discrète (2d), formant ainsi le (N+1)$^{ème}$ pli préimprégné discret,

    **Caractérisé en ce que,** au moins un pli préimprégné discret, de préférence tous les plis préimprégnés discrets sont des plis discrets segmentés (8) selon l'une quelconque des revendication 1 à 6, dans lequel la couche préimprégnée discrète (3d) est formée par la couche préimprégnée segmentée discrète (3ds) telle que définie à la revendication 1c),

10. Procédé selon l'une quelconque des revendications 7 à 9, dans lequel les fibres d'une couche préimprégnée discrète (3d) donnée forment un angle de renfort ($\beta$) compris entre 0 et 180° (i.e., $\beta$ = 0 à 180°) avec les fibres des couches préimprégnées discrètes (3d) du même empilement discret qui sont adjacentes à et en contact avec la couche préimprégnée discrète (3d) donnée, dans lequel, de préférence, toutes les couches préimprégnées discrètes (3d) d'un empilement discret sont les couches préimprégnées segmentées discrètes (3ds) dont les angles de découpe sont de 90° ou $\pm$45° et dont les angles de renfort ($\beta$) sont égaux à l'angle de découpe ($\alpha$) additionné d'un multiple (n) de 45° avec n = 0 à 4 (i.e. $\beta = \alpha + n\ 45°$, avec n = 0 à 4).

11. Nappe continue segmentée (5) obtenue par l'étape b) du procédé selon la revendications 1, et comprenant,

    • une couche préimprégnée segmentée continue (3s) ayant une épaisseur et étant constituée de fibres unidirectionnelles disposées parallèlement à la direction longitudinale (D), les fibres étant noyées dans une matrice de résine, et

• une doublure antiadhésive continue (2) appliquée sur une face de la couche préimprégnée segmentée continue (3s),

**caractérisé en ce que,** seule la couche segmentée continue (3s) comprend des segments (4) découpés sur toute son épaisseur et disposés en quinconce.

12. Pli discret segmenté imprégné (8) obtenu par un procédé selon l'une quelconque des revendications 1 à 6, ayant une géométrie discrète inscrite dans un rectangle de longueur (L) et de largeur (l) de rapport de la longueur sur la largeur (L /l) inférieur ou égal à 20 (i.e., L /l $\leq$ 20) et comprenant,

   • une couche préimprégnée segmentée discrète (3ds) ayant une épaisseur et étant constituée de fibres unidirectionnelles disposées parallèlement à la direction longitudinale (D), les fibres étant noyées dans une matrice de résine, et
   • une doublure antiadhésive discrète (2d) appliquée sur une face de la couche préimprégnée segmentée discrète (3ds),

   **caractérisé en ce que,** seule la couche segmentée discrète (3ds) comprend des segments (4) découpés sur toute son épaisseur et disposés en quinconce.

13. Matelas multicouche segmenté discret (80) obtenu par un procédé selon l'une quelconque des revendications 8 à 10 et composé d'un empilement de couches préimpregnées discrètes (3d) comprenant, d'une part,

   • (N+1) couches préimprégnées discrètes (3d) de fibres unidirectionnelles noyées dans une matrice de résine, les (N+1) couches préimprégnées discrètes étant empilées les unes sur les autres et
   • une doublure antiadhésive discrète (2d) appliquée sur une face libre de chacune d'une première et d'une (N + 1)$^{ème}$ couches préimprégnées discrètes, enfermant en sandwich les (N+1) couches préimprégnées discrètes.

   **Caractérisé en ce qu'**au moins une des (N+1) couches préimprégnées discrètes (3d), de préférence toutes les (N+1) couches préimprégnées discrètes (3d) sont des couches préimprégnées segmentées discrètes (3ds) telles que définies à la revendication 11 et **en ce que,** au moins une couche préimprégnée segmentée discrète (3ds) a une géométrie de triangle, de trapèze ou de parallélogramme, avec de préférence au moins deux angles différents de 90°.

14. Matelas multicouche segmenté discret (80) selon la revendication 12, dans lequel les fibres d'une couche préimprégnée discrète (3d) donnée forment un angle de renfort ($\beta$) compris entre 0 et 180° (i.e., $\beta$ = 0 à 180°) avec les fibres des couches préimprégnées discrètes (3d) du même empilement discret qui sont adjacentes à et en contact avec la couche préimprégnée discrète (3d) donnée, dans lequel, de préférence, toutes les couches préimprégnées discrètes (3d) d'un empilement discret sont les couches préimprégnées segmentées discrètes (3ds) dont les angles de découpe sont de 90° ou $\pm$45° et dont les angles de renfort ($\beta$) sont égaux à l'angle de découpe ($\alpha$) additionné d'un multiple (n) de 45° avec n = 0 à 4 (i.e. $\beta = \alpha$ + n $\times$ 45°, avec n = 0 à 4).

15. Procédé pour produire une pièce composite (90) comprenant,

   • fournir un matelas multicouche segmenté discret (80) obtenu par un procédé selon la revendication 9 ou 10,
   • découper le matelas multicouche segmenté discret (80) pour former une sous-préforme (80p) dont la géométrie est adaptée à une géométrie de la pièce composite (90),
   • optionnellement, assembler différentes sous-préformes (80p) pour former une préforme finale (90p) de la pièce composite (90),
   • déposer la sous-préforme (80p) ou la préforme finale (90p) dans un moule (100),
   • appliquer de la pression et de la chaleur afin de consolider la sous-préforme (80p) ou la préforme finale (90p) et ainsi former la pièce composite (90), et
   • retirer la pièce composite (90) du moule.

16. Procédé selon la revendication 15, dans lequel au moins une partie de la pièce composite (90) est soit,

   • quasi-isotrope produite avec un matelas multicouche segmenté discret (80) ou une préforme finale (90p) dont les angles de renfort ($\beta$) varient entre les couches préimprégnées discrètes (3d) entre 0°, $\pm$45°, et 90°, soit
   • quasi orthotrope produit avec un matelas multicouche segmenté discret (80) ou une préforme finale (90p) dont toutes les fibres sont orientées suivant un même angle de renfort ($\beta$) de 0°, ou

• mixte produit avec un matelas multicouche segmenté discret (80) ou une préforme finale (90p) dont les angles de renfort ($\beta$) varient entre les couches préimprégnées discrètes (3d) selon les propriétés mécaniques localement désirées,

**Patentansprüche**

1. Verfahren zur Herstellung einer segmentierten diskreten Lage (8) zur Bildung einer diskreten segmentierten Mehrschichtmatte, wobei das Verfahren die folgenden Schritte umfasst:

a) Bereitstellen einer durchgehenden einschichtigen Bahn (1), die Folgendes umfasst,

• eine durchgehende vorimprägnierte Schicht (3), die aus unidirektionalen Fasern gebildet ist, die parallel zu einer Längsrichtung (D) angeordnet sind, wobei die Fasern in eine Harzmatrix eingebettet sind,
• einen durchgehenden Antihaftliner (2), der auf eine Seite der durchgehenden vorimprägnierten Schicht aufgebracht ist,

b) Zuschneiden der durchgehenden einschichtigen Bahn (1), die in Schritt a) bereitgestellt wird, um in der durchgehenden vorimprägnierten Schicht (3) Segmente (4) zu bilden, die versetzt angeordnet sind, und so eine segmentierte durchgehende Bahn (5) zu bilden, wobei der Zuschnitt so durchgeführt wird, dass der durchgehende Antihaftliner (2) intakt gelassen wird;

c) Zuschneiden in Querrichtung der segmentierten durchgehenden Bahn (5), die in Schritt b) erhalten wird, gemäß zweier Zuschnittlinien (6, 7), die parallel zu Zuschnittrichtungen (d1, d2, d3) verlaufen, die schräg zu Längsrichtung (D) orientiert sind, wobei die segmentierte durchgehende Bahn (5) über ihre gesamte Breite und Dicke zugeschnitten wird, einschließlich des Antihaftliners, wobei auf diese Weise eine segmentierte diskrete Lage (8) gebildet wird, die von einer diskreten segmentierten vorimprägnierten Schicht (3ds) und dem Antihaftliner gebildet ist, und wobei die Zuschnittlinien (6, 7) einen Zuschnittwinkel ($\alpha$) mit der Längsrichtung (D) bilden;

wobei eine durchgehende Bahn eine Bahn mit einer Geometrie ist, die in einem Rechteck mit einer Länge (L) und einer Breite (1) mit einem Verhältnis der Länge zur Breite (L/l) über 20 (d.h. L /l > 20) eingeschrieben ist, und eine diskrete Lage eine Lage mit einer Geometrie ist, die in einem Rechteck mit einer Länge (L) und einer Breite (1) mit einem Verhältnis der Länge zur Breite (L/l) kleiner als oder gleich 20 (d.h. L /1 ≤ 20) eingeschrieben ist.

2. Verfahren nach einem der vorhergehenden Ansprüche, wobei der Zuschnittwinkel ($\alpha$) aus den folgenden Werten gewählt wird, 90°, +45°, -45°, +60°, -60°, +30°, -30°, auf ± 5° genau.

3. Verfahren nach Anspruch 1 oder 2, wobei der durchgehende Antihaftliner (2) von einem Träger aus Papier gebildet ist, der mit einer Schicht aus Silikon bedeckt ist.

4. Verfahren nach einem der Ansprüche 1 bis 3, wobei die Fasern der durchgehenden vorimprägnierten Schicht von Karbon-, Glas-, Aramid-, Keramik- oder Naturfasern gebildet sind und entweder

• in einem wärmehärtenden Harz, das vorzugsweise ein Epoxidharz umfasst, oder
• in einem thermoplastischen Polymer eingebettet sind.

5. Verfahren nach einem der vorhergehenden Ansprüche, wobei in ein und derselben segmentierten diskreten Lage (8) die Segmente (4) eine Geometrie aufweisen, die zwei gegenüberliegende Seiten umfasst, die parallel zur Längsrichtung (D) verlaufen, mit gleichen Abmessungen innerhalb der segmentierten diskreten Lage, wobei die Geometrie der Segmente in einem Rechteck mit einer Länge, die entlang der Längsrichtung (D) gemessen wird, die vorzugsweise zwischen 10 mm und 200 mm, vorzugsweise zwischen 50 und 150 mm, weiter bevorzugt zwischen 70 und 130 mm liegt oder im Wesentlichen gleich 100 mm ist, und einer Breite, die vorzugsweise zwischen 5 mm und 50 mm liegt, vorzugsweise im Wesentlichen gleich 8 mm ist, eingeschrieben ist.

6. Verfahren nach einem der vorhergehenden Ansprüche, wobei die durchgehende einschichtige Bahn (1) aus Abfällen stammt, die in einem vorherigen Verfahren zur Herstellung von Verbundteilen nicht verwendet wurden.

7. Verfahren zur Herstellung eines durchgehenden Bands aus diskreten Stapeln, umfassend die folgenden Schritte:

a) Bereitstellen eines durchgehenden Bands (15), das aus einer durchgehenden einschichtigen Bahn (1) nach Anspruch 1a) oder einer segmentierten durchgehenden Bahn (5) nach Anspruch 1b) oder einem durchgehenden Antihaftliner (2) gebildet ist,

b) Auflegen, auf eine Seite des durchgehenden Bands (15), die nicht den durchgehenden Antihaftliner (2) umfasst, oder auf den durchgehenden Antihaftliner (2), wenn das durchgehende Band (15) von einem durchgehenden Antihaftliner (2) gebildet ist, einer Reihe von Stapeln, die jeweils aus N diskreten vorimprägnierten Schichten (3d) zusammengesetzt sind, die aufeinander gestapelt sind, wobei $N \in \mathbb{N}$ und N ≥ 1, um das durchgehende Band aus diskreten Stapeln zu bilden, wobei jeder Stapel durch die folgenden Schritte auf das Band aufgelegt wird

- Bereitstellen von N diskreten vorimprägnierten Lagen, umfassend einerseits,

  ◦ die diskrete vorimprägnierte Schicht (3d), die unidirektionale Fasern umfasst, die in eine Harzmatrix eingebettet sind, und
  ◦ einen diskreten Antihaftliner (2d), der auf eine Seite der diskreten vorimprägnierten Schicht (3d) aufgebracht ist,

- sequentielles Auflegen der N diskreten vorimprägnierten Lagen auf das durchgehende Band (15) durch Entfernen des diskreten Antihaftliners (2d) von jeder diskreten vorimprägnierten Lage, bevor eine neue diskrete vorimprägnierte Lage darauf gelegt wird, und, wahlweise, Kompaktieren der so gestapelten diskreten vorimprägnierten Lagen, so dass,

  ◦ die diskrete vorimprägnierte Schicht (3d) einer ersten diskreten vorimprägnierten Lage (3d) mit der durchgehenden vorimprägnierten Schicht (3) des durchgehenden Bands (15) in Kontakt steht, auf das die erste diskrete vorimprägnierte Schicht gelegt ist,
  ◦ die diskrete vorimprägnierte Schicht (3d) der zweiten bis zur N-ten diskreten vorimprägnierten Lage mit der diskreten vorimprägnierten Schicht (3d) der angrenzenden diskreten vorimprägnierten Lagen in Kontakt stehen, mit denen sie in Kontakt stehen,
  ◦ die N-te diskrete vorimprägnierte Schicht (3d) eine freie Seite aufweist, auf der der diskrete Antihaftliner (2d) aufgelegt ist, wodurch die N-te diskrete vorimprägnierte Lage gebildet wird,

**dadurch gekennzeichnet, dass** wenigstens eine diskrete vorimprägnierte Lage, vorzugsweise alle diskreten vorimprägnierten Lagen, segmentierte diskrete Lagen (8) sind, die durch das Verfahren nach einem der Ansprüche 1 bis 6 erhalten werden, wobei die diskrete vorimprägnierte Schicht (3d) von der diskreten segmentierten vorimprägnierten Schicht (3ds) nach Anspruch 1c) gebildet ist,

8. Verfahren nach Anspruch 7, umfassend den Schritt des Zuschneidens des durchgehenden Bands (15) des durchgehenden Bands aus diskreten Stapeln zwischen zwei aneinandergrenzenden diskreten Stapeln, um eine Reihe von diskreten segmentierten Mehrschichtmatten (80) zu erhalten, die jeweils (N + 1) diskrete vorimprägnierte Schichten (3d) umfassen.

9. Verfahren zur Herstellung einer diskreten segmentierten Mehrschichtmatte (80), die (N + 1) diskrete vorimprägnierte Schichten (3d) umfasst, umfassend die folgenden Schritte,

- Bereitstellen von (N+1) diskreten vorimprägnierten Lagen, jeweils umfassend, einerseits,

  ◦ eine diskrete vorimprägnierte Schicht (3d), die unidirektionale Fasern umfasst, die in eine Harzmatrix eingebettet sind, und
  ◦ einen diskreten Antihaftliner (2d), der auf eine Seite der diskreten vorimprägnierten Schicht (3d) aufgebracht ist,

- Legen einer ersten diskreten vorimprägnierten Lage (3d) auf den Antihaftliner, wodurch die diskrete vorimprägnierte Schicht (3d) freigelegt wird,
- sequentielles Auflegen, auf die erste diskrete vorimprägnierte Lage (3d), von N diskreten vorimprägnierten Lagen durch Entfernen des diskreten Antihaftliners (2d) von jeder diskreten vorimprägnierten Lage, bevor eine neue diskrete vorimprägnierte Lage darauf gelegt wird, und wahlweise, Kompaktieren der so gestapelten diskreten vorimprägnierten Lagen, so dass,

   ◦ die diskrete vorimprägnierte Schicht (3d) jeder diskreten vorimprägnierten Lage (3d) mit der diskreten vorimprägnierten Schicht (3d) der angrenzenden diskreten vorimprägnierten Lagen in Kontakt steht, mit denen sie in Kontakt stehen,

   ◦ eine (N+1)-te diskrete vorimprägnierte Schicht (3d) eine freie Seite aufweist, auf der der diskrete Antihaftliner (2d) aufgelegt ist, wodurch die (N+1)-te diskrete vorimprägnierte Lage gebildet wird,

**dadurch gekennzeichnet, dass** wenigstens eine diskrete vorimprägnierte Lage, vorzugsweise alle diskreten vorimprägnierten Lagen, segmentierte diskrete Lagen (8) nach einem der Ansprüche 1 bis 6 sind, wobei die diskrete vorimprägnierte Schicht (3d) von der diskreten segmentierten vorimprägnierten Schicht (3ds) nach Anspruch 1c) gebildet ist,

10. Verfahren nach einem der Ansprüche 7 bis 9, wobei die Fasern einer bestimmten diskreten vorimprägnierten Schicht (3d) einen Verstärkungswinkel ($\beta$) zwischen 0 und 180° (d.h. $\beta$ = 0 bis 180°) mit den Fasern der diskreten vorimprägnierten Schichten (3d) desselben diskreten Stapels bilden, die an die bestimmte diskrete vorimprägnierte Schicht (3d) angrenzen und mit ihr in Kontakt stehen, wobei vorzugsweise alle diskreten vorimprägnierten Schichten (3d) eines diskreten Stapels diskrete segmentierte vorimprägnierte Schichten (3ds) sind, deren Zuschnittwinkel 90° oder +45° betragen und deren Verstärkungswinkel ($\beta$) gleich dem Zuschnittwinkel ($\alpha$) sind, dem ein Vielfaches (n) von 45° hinzuaddiert ist, mit n = 0 bis 4 (d.h. $\beta = \alpha$ + n 45°, mit n = 0 bis 4) .

11. Segmentierte durchgehende Bahn (5), die durch den Schritt b) des Verfahrens nach Anspruch 1 erhalten wurde und Folgendes umfasst,

   • eine durchgehende segmentierte vorimprägnierte Schicht (3s), die eine Dicke aufweist und aus unidirektionalen Fasern gebildet ist, die parallel zur Längsrichtung (D) angeordnet sind, wobei die Fasern in eine Harzmatrix eingebettet sind, und

   • einen durchgehenden Antihaftliner (2), der auf eine Seite der durchgehenden segmentierten vorimprägnierten Schicht (3s) aufgebracht ist,

**dadurch gekennzeichnet, dass** nur die durchgehende segmentierte Schicht (3s) Segmente (4) umfasst, die über ihre gesamte Dicke zugeschnitten sind und versetzt angeordnet sind.

12. Imprägnierte segmentierte diskrete Lage (8), die durch ein Verfahren nach einem der Ansprüche 1 bis 6 erhalten wurde, mit einer diskreten Geometrie, die in einem Rechteck mit einer Länge (L) und einer Breite (1) mit einem Verhältnis der Länge zur Breite (L/l) kleiner als oder gleich 20 (d.h. L /l ≤ 20) eingeschrieben ist und Folgendes umfasst,

   • eine diskrete segmentierte vorimprägnierte Schicht (3ds), die eine Dicke aufweist und aus unidirektionalen Fasern gebildet ist, die parallel zur Längsrichtung (D) angeordnet sind, wobei die Fasern in eine Harzmatrix eingebettet sind, und

   • einen diskreten Antihaftliner (2d), der auf eine Seite der diskreten segmentierten vorimprägnierten Schicht (3ds) aufgebracht ist,

**dadurch gekennzeichnet, dass** nur die diskrete segmentierte Schicht (3ds) Segmente (4) umfasst, die über ihre gesamte Dicke zugeschnitten sind und versetzt angeordnet sind.

13. Diskrete segmentierte Mehrschichtmatte (80), die durch ein Verfahren nach einem der Ansprüche 8 bis 10 erhalten wurde und aus einem Stapel diskreter vorimprägnierter Schichten (3d) zusammengesetzt ist, umfassend, einerseits,

   • (N+1) diskrete vorimprägnierte Schichten (3d) aus unidirektionalen Fasern, die in eine Harzmatrix eingebettet sind, wobei die (N+1) diskreten vorimprägnierten Schichten aufeinander gestapelt sind und

   • einen diskreten Antihaftliner (2d), der auf eine freie Seite von jeder einer ersten und einer (N+1)-ten diskreten vorimprägnierten Schicht aufgebracht ist, der die (N+1) diskreten vorimprägnierten Schichten sandwichartig einschließt,

**dadurch gekennzeichnet, dass** wenigstens eine der (N+1) diskreten vorimprägnierten Schichten (3d), vorzugsweise alle (N+1) diskreten vorimprägnierten Schichten (3d), diskrete segmentierte vorimprägnierte Schichten (3ds) nach Anspruch 11 sind, und **dadurch, dass** wenigstens eine diskrete segmentierte vorimprägnierte Schicht (3ds) eine Dreiecks-, Trapez- oder Parallelogrammgeometrie aufweist, vorzugsweise mit wenigstens zwei Winkeln, die sich von 90° unterscheiden.

**14.** Diskrete segmentierte Mehrschichtmatte (80) nach Anspruch 12, wobei die Fasern einer bestimmten diskreten vorimprägnierten Schicht (3d) einen Verstärkungswinkel ($\beta$) zwischen 0 und 180° (d.h. $\beta$ = 0 bis 180°) mit den Fasern der diskreten vorimprägnierten Schichten (3d) desselben diskreten Stapels bilden, die an die bestimmte diskrete vorimprägnierte Schicht (3d) angrenzen und mit ihr in Kontakt stehen, wobei vorzugsweise alle diskreten vorimprägnierten Schichten (3d) eines diskreten Stapels diskrete segmentierte vorimprägnierte Schichten (3ds) sind, deren Zuschnittwinkel 90° oder +45° betragen und deren Verstärkungswinkel ($\beta$) gleich dem Zuschnittwinkel ($\alpha$) sind, dem ein Vielfaches (n) von 45° hinzuaddiert ist, mit n = 0 bis 4 (d.h. $\beta$ = $\alpha$ + n $\times$ 45°, mit n = 0 bis 4).

**15.** Verfahren zur Herstellung eines Verbundteils (90) umfassend,

- Bereitstellen einer diskreten segmentierten Mehrschichtmatte (80), die durch ein Verfahren nach Anspruch 9 oder 10 erhalten wurde,
- Zuschneiden der diskreten segmentierten Mehrschichtmatte (80), um einen Teilvorformling (80p) zu bilden, dessen Geometrie an eine Geometrie des Verbundteils (90) angepasst ist,
- wahlweise, Zusammensetzen verschiedener Teilvorformlinge (80p), um einen finalen Vorformling (90p) des Verbundteils (90) zu bilden,
- Einlegen des Teilvorformlings (80p) oder des finalen Vorformlings (90p) in eine Form (100),
- Anwenden von Druck und Hitze, um den Teilvorformling (80p) oder den finalen Vorformling (90p) zu verfestigen und so das Verbundteil (90) zu bilden, und
- Entnehmen des Verbundteils (90) aus der Form.

**16.** Verfahren nach Anspruch 15, wobei wenigstens ein Abschnitt des Verbundteils (90) entweder

- quasi-isotrop mit einer diskreten segmentierten Mehrschichtmatte (80) oder einem finalen Vorformling (90p) hergestellt wird, deren Verstärkungswinkel ($\beta$) zwischen den diskreten vorimprägnierten Schichten (3d) zwischen 0°, ±45° und 90° variieren, oder
- quasi-orthotrop mit einer diskreten segmentierten Mehrschichtmatte (80) oder einem finalen Vorformling (90p) hergestellt wird, von denen alle Fasern gemäß ein und demselben Verstärkungswinkel ($\beta$) von 0° orientiert sind, oder
- gemischt mit einer diskreten segmentierten Mehrschichtmatte (80) oder einem finalen Vorformling (90p) hergestellt wird, deren Verstärkungswinkel ($\beta$) zwischen den diskreten vorimprägnierten Schichten (3d) je nach den lokal gewünschten mechanischen Eigenschaften variieren.

## Claims

**1.** Process for manufacturing a segmented discrete ply (8) intended for the formation of a discrete segmented multilayer mat, the process comprising the steps of:

a) providing a continuous single-layer sheet (1) comprising,

- a continuous pre-impregnated layer (3) composed of unidirectional fibres disposed parallel to a longitudinal direction (D), the fibres being embedded in a resin matrix,
- a continuous antiadhesive lining (2) applied to a face of the continuous pre-impregnated layer,

b) cutting the continuous single-layer sheet (1) supplied in the step a) so as to form, in the continuous pre-impregnated layer (3), segments (4) disposed in staggered fashion and thus form a segmented continuous sheet (5), said cutting being performed in such a way as to leave the continuous antiadhesive lining (2) intact;

c) cutting the segmented continuous sheet (5) obtained in the step b) transversely along two cutting lines (6, 7) parallel to cutting directions (d1, d2, d3), oriented transversally with respect to the longitudinal direction (D), the segmented continuous sheet (5) being cut over its entire width and thickness, including the antiadhesive lining, thus forming a segmented discrete ply (8) formed by a discrete segmented pre-impregnated layer (3ds) and the antiadhesive lining, and wherein the cutting lines (6, 7) form a cutting angle ($\alpha$) with the longitudinal direction (D);

wherein, a continuous sheet is a sheet having a geometry inscribed within a rectangle of length (L) and of width (l) with length-to-width ratio (L/l) greater than 20 (i.e. L/l > 20) and a discrete ply is a ply having a geometry inscribed within a rectangle of length (L) and of width (l) of length-to-width ratio (L/l) less than or equal to 20 (i.e. L/l $\leq$ 20).

2. Process according to one of the preceding claims, wherein the cutting angle ($\alpha$) is chosen from among the following values, 90°, +45°, -45°, +60°, -60°, +30°, - 30°, to within ± 5°.

3. Process according to Claim 1 or 2, wherein the continuous antiadhesive lining (2) is composed of a paper support covered with a silicone-based layer.

4. Process according to any one of Claims 1 to 3, wherein the fibres of the continuous pre-impregnated layer are composed of carbon, glass, aramid, ceramic or natural fibres and are embedded either,

   • in a thermosetting resin, preferably comprising an epoxy resin, or
   • in a thermoplastic polymer.

5. Process according to any one of the preceding claims, wherein, in a same segmented discrete ply (8), the segments (4) have a geometry comprising two opposite sides parallel to the longitudinal direction (D) having dimensions that are identical within the segmented discrete ply, the geometry of the segments being inscribed in a rectangle with a length measured along the longitudinal direction (D) lying preferably between 10 mm and 200 mm, preferably between 50 and 150 mm, more preferably between 70 and 130 mm or substantially equal to 100 mm, and a width lying preferably between 5 mm and 50 mm, preferably substantially equal to 8 mm.

6. Process according to any one of the preceding claims, wherein the continuous single-layer sheet (1) originates from unused scrap in a prior composite part manufacturing process.

7. Process for manufacturing a continuous strip of discrete stacks, comprising the following steps:

   a) providing a continuous strip (15) composed of a continuous single-layer sheet (1) as defined in Claim 1a) or of a segmented continuous sheet (5) as defined in Claim 1b), or a continuous antiadhesive lining (2),
   b) depositing, on a face of the continuous strip (15) not including the continuous antiadhesive lining (2) or on the continuous antiadhesive lining (2) if the continuous strip (15) is formed by a continuous antiadhesive lining (2), a series of stacks each composed of N discrete pre-impregnated layers (3d) stacked one on top of the other, in which $N \in \mathbb{N}$ and N ≥ 1, to form the continuous strip of discrete stacks, in which each stack is deposited on the continuous strip by the following steps

      • supplying N discrete pre-impregnated plies comprising, on the one hand,

         ◦ the discrete pre-impregnated layer (3d) which comprises unidirectional fibres embedded in a resin matrix, and
         ◦ a discrete antiadhesive lining (2d) applied to a face of the discrete pre-impregnated layer (3d),

      • depositing sequentially on the continuous strip (15) the N discrete pre-impregnated plies by removing the discrete antiadhesive lining (2d) of each discrete pre-impregnated ply, before laying a new discrete pre-impregnated ply on the latter and optionally compacting the duly stacked discrete pre-impregnated plies, such that,

         ◦ the discrete pre-impregnated layer (3d) of a first discrete pre-impregnated ply (3d) is in contact with the continuous pre-impregnated layer (3) of the continuous strip (15) on which the first discrete pre-impregnated ply is laid,
         o the discrete pre-impregnated layer (3d) of the second to Nth discrete pre-impregnated plies are in contact with the discrete pre-impregnated layer (3d) of the adjacent discrete pre-impregnated plies with which they are in contact,
         o the Nth discrete pre-impregnated layer (3d) has a free face on which is deposited the discrete antiadhesive lining (2d), thus forming the Nth discrete pre-impregnated ply,

   **characterized in that** at least one discrete pre-impregnated ply, preferably all the discrete pre-impregnated plies, are segmented discrete plies (8) obtained by the process according to any one of Claims 1 to 6, wherein the discrete pre-impregnated layer (3d) is formed by the discrete segmented pre-impregnated layer (3ds) as defined in Claim 1c).

8. Process according to Claim 7, comprising the step of cutting the continuous strip (15) from the continuous strip of discrete stacks between two adjacent discrete stacks to obtain a series of discrete segmented multilayer mats (80) each comprising (N+1) discrete pre-impregnated layers (3d).

9. Process for manufacturing a discrete segmented multilayer mat (80) comprising (N+1) discrete pre-impregnated layers (3d), comprising the following steps,

   • supplying (N+1) discrete pre-impregnated plies each comprising, on the one hand,

      o a discrete pre-impregnated layer (3d) which comprises unidirectional fibres embedded in a resin matrix, and
      o a discrete antiadhesive lining (2d) applied to a face of the discrete pre-impregnated layer (3d),

   • laying a first discrete pre-impregnated ply (3d) on the antiadhesive lining, thus exposing the discrete pre-impregnated layer (3d),
   • depositing, sequentially on the first discrete pre-impregnated ply (3d), N discrete pre-impregnated plies by removing the discrete antiadhesive lining (2d) from each discrete pre-impregnated ply, before laying a new discrete pre-impregnated ply thereon and optionally compacting the duly stacked discrete pre-impregnated plies, such that,

      o the discrete pre-impregnated layer (3d) of each discrete pre-impregnated ply (3d) is in contact with the discrete pre-impregnated layer (3d) of the adjacent discrete pre-impregnated plies with which they are in contact,
      o an (N+1)th discrete pre-impregnated layer (3d) has a free face on which the discrete antiadhesive lining (2d) is deposited, thus forming the (N+1)th discrete pre-impregnated ply,

   **characterized in that** at least one discrete pre-impregnated ply, preferably all the discrete pre-impregnated plies, are segmented discrete plies (8) according to any one of Claims 1 to 6, wherein the discrete pre-impregnated layer (3d) is formed by the discrete segmented pre-impregnated layer (3ds) as defined in Claim 1c).

10. Process according to any one of Claims 7 to 9, wherein the fibres of a given discrete pre-impregnated layer (3d) form a reinforcement angle ($\beta$) lying between 0 and 180° (i.e., $\beta = 0$ to 180°) with the fibres of the discrete pre-impregnated layers (3d) of the same discrete stack which are adjacent to and in contact with the given discrete pre-impregnated layer (3d), wherein, preferably, all the discrete pre-impregnated layers (3d) of a discrete stack are the discrete segmented pre-impregnated layers (3ds) whose cutting angles are 90° or $\pm 45°$ and whose reinforcement angles ($\beta$) are equal to the cutting angle ($\alpha$) plus a multiple (n) of 45° with n = 0 to 4 (i.e. $\beta = \alpha + n\,45°$, with n = 0 to 4).

11. Segmented continuous sheet (5) obtained by the step b) of the process according to Claim 1, and comprising,

   • a continuous segmented pre-impregnated layer (3s) having a thickness and being composed of unidirectional fibres disposed parallel to the longitudinal direction (D), the fibres being embedded in a resin matrix, and
   • a continuous antiadhesive lining (2) applied to a face of the continuous segmented pre-impregnated layer (3s),

   **characterized in that** only the continuous segmented layer (3s) comprises segments (4) cut over its entire thickness and disposed in staggered fashion.

12. Impregnated segmented discrete ply (8) obtained by a process according to any one of Claims 1 to 6, having a discrete geometry inscribed in a rectangle of length (L) and of width (I) with a length-to-width ratio (L/I) less than or equal to 20 (i.e., L/I ≤ 20) and comprising,

   • a discrete segmented pre-impregnated layer (3ds) having a thickness and being composed of unidirectional fibres disposed parallel to the longitudinal direction (D), the fibres being embedded in a resin matrix, and
   • a discrete antiadhesive lining (2d) applied to a face of the discrete segmented pre-impregnated layer (3ds),

   **characterized in that** only the discrete segmented layer (3ds) comprises segments (4) cut over its entire thickness and disposed in staggered fashion.

13. Discrete segmented multilayer mat (80) obtained by a process according to any one of Claims 8 to 10 and composed of a stack of discrete pre-impregnated layers (3d) comprising, on the one hand,

• (N+1) discrete pre-impregnated layers (3d) of unidirectional fibres embedded in a resin matrix, the (N + 1) discrete pre-impregnated layers being stacked one on top of the other, and
• a discrete antiadhesive lining (2d) applied to a free face of each of a first and an (N+1)th discrete pre-impregnated layer, sandwiching the (N+1) discrete pre-impregnated layers,

**characterized in that** at least one of the (N+1) discrete pre-impregnated layers (3d), preferably all the (N+1) discrete pre-impregnated layers (3d), are discrete segmented pre-impregnated layers (3ds) as defined in Claim 11 and **in that** at least one discrete segmented pre-impregnated layer (3ds) has a triangular, trapezoidal or parallelogram geometry, with preferably at least two angles different from 90°.

14. Discrete segmented multilayer mat (80) according to Claim 12, wherein the fibres of a given discrete pre-impregnated layer (3d) form a reinforcement angle ($\beta$) lying between 0 and 180° (i.e. $\beta$ = 0 to 180°) with the fibres of the discrete pre-impregnated layers (3d) of the same discrete stack which are adjacent to and in contact with the given discrete pre-impregnated layer (3d), wherein, preferably, all the discrete pre-impregnated layers (3d) of a discrete stack are the discrete segmented pre-impregnated layers (3ds) whose cutting angles are 90° or ±45° and whose reinforcement angles ($\beta$) are equal to the cutting angle ($\alpha$) plus a multiple (n) of 45° with n = 0 to 4 (i.e. $\beta = \alpha + n \times 45°$, with n = 0 to 4) .

15. Process for producing a composite part (90) comprising,

• supplying a discrete segmented multilayer mat (80) obtained by a process according to Claim 9 or 10,
• cutting the discrete segmented multilayer mat (80) to form a sub-preform (80p) whose geometry is matched to a geometry of the composite part (90),
• optionally, joining different sub-preforms (80p) to form a final preform (90p) of the composite part (90),
• depositing the sub-preform (80p) or the final preform (90p) in a mould (100),
• applying pressure and heat in order to consolidate the sub-preform (80p) or the final preform (90p) and thus form the composite part (90), and
• removing the composite part (90) from the mould.

16. Process according to Claim 15, wherein at least a part of the composite part (90) is either,

• quasi-isotropic produced with a discrete segmented multilayer mat (80) or a final preform (90p) whose reinforcement angles ($\beta$) vary between the discrete pre-impregnated layers (3d) between 0°, ±45°, and 90°, or
• quasi-orthotropic produced with a discrete segmented multilayer mat (80) or a final preform (90p) in which all the fibres are oriented according to a same reinforcement angle ($\beta$) of 0°, or
• hybrid produced with a discrete segmented multilayer mat (80) or a final preform (90p) in which the reinforcement angles ($\beta$) vary between the discrete pre-impregnated layers (3d) according to the locally desired mechanical properties.

[Fig. 1]

[Fig. 1a]

[Fig. 2]

[Fig. 2a]

$\alpha = +45°$

[Fig. 3]

[Fig. 3a]

[Fig. 4]

[Fig. 4a]

[Fig. 5]

8

8

15

[Fig. 6]

7

6 6

α = 45°

β = -45°

D

[Fig. 6a]

15

2

15

8

8

8

[Fig. 7]

β = 90°

d3

D

[Fig. 7a]

15

8

8

8

8

[Fig. 8]

d2

β = 0°

D

[Fig. 8a]

15    2d ⎫
      ⎬ 8
3d, 3ds    15

11,13

[Fig. 9a]

15                                    P

15    ⎫ 8
      ⎬
      } 15

[Fig. 9b]

15                2d        2d

3ds, 3d

[Fig. 9c]

2d

3ds, 3d

3

2d

15                2

[Fig. 10]

L / l ≤ 20

l

L

4   3ds

α

8

2d

[Fig. 11a]

l

L

4   3ds   2d

L / l ≤ 20

3d, 3ds

α

0°
+45°
-45°
90°

80

2d

[Fig. 11b]

13   13   1   12   5   14   8   80

90   P, T   100   90p   80p 80p

[Fig. 12]

140 ─ -3%

120 ─ -4%

100

E (GPa)
σr (MPa)

80

E (GPa)

60

40 ─ +24%

20 ─ +50%

0

1400

1200

1000

800

600

σr (MPa)

400

200

0

CEx - SMC   INV – Quasi-iso   CEx – UD   INV – UD

[Fig. 13]

[Fig. 14]

**EP 4 297 960 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100233423 A1
- US 6838148 B1
- EP 0916477 A1
- EP 1134314 A1
- EP 3140104 A1
- FR 3078010 A1